(19) Europäisches Patentamt
European Patent Office
Office européen des brevets

(11) **EP 4 667 600 A1**

(12) **EUROPEAN PATENT APPLICATION**
published in accordance with Art. 153(4) EPC

(43) Date of publication:
**24.12.2025 Bulletin 2025/52**

(21) Application number: **24756917.1**

(22) Date of filing: **14.02.2024**

(51) International Patent Classification (IPC):
$C22C\ 38/00^{(2006.01)}$  $C21D\ 1/18^{(2006.01)}$
$C21D\ 9/00^{(2006.01)}$  $C21D\ 9/46^{(2006.01)}$
$C22C\ 21/00^{(2006.01)}$  $C22C\ 21/02^{(2006.01)}$
$C22C\ 38/60^{(2006.01)}$  $C23C\ 2/12^{(2006.01)}$

(52) Cooperative Patent Classification (CPC):
C21D 1/18; C21D 9/00; C21D 9/46; C22C 21/00;
C22C 21/02; C22C 38/00; C22C 38/60; C23C 2/12

(86) International application number:
**PCT/JP2024/005045**

(87) International publication number:
**WO 2024/172076 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023 JP 2023022724**

(71) Applicant: **NIPPON STEEL CORPORATION
Chiyoda-ku
Tokyo 100-8071 (JP)**

(72) Inventors:
• **KUSUMI, Kazuhisa**
  **Tokyo 100-8071 (JP)**
• **FUJITA, Soshi**
  **Tokyo 100-8071 (JP)**
• **SUZUKI, Yuki**
  **Tokyo 100-8071 (JP)**
• **TABATA, Shinichiro**
  **Tokyo 100-8071 (JP)**
• **IRIKAWA, Hideaki**
  **Tokyo 100-8071 (JP)**
• **EGUCHI, Haruhiko**
  **Tokyo 100-8071 (JP)**

(74) Representative: **Zimmermann & Partner
Patentanwälte mbB
P.O. Box 330 920
80069 München (DE)**

(54) **HOT STAMP MOLDED BODY, AND ALUMINUM-PLATED STEEL SHEET FOR HOT STAMPING**

(57)     Adopted are an aluminum-coated steel sheet for hot stamping including a steel sheet, an Fe-Al-Si alloy layer provided onto the steel sheet, and an Al-based coating layer provided onto the Fe-Al-Si alloy layer, in which a Cu content in the Fe-Al-Si alloy layer satisfies Expression (4) ($Cu_i \leq 0.4 \times Cu_0$), and a hot-stamp formed part that can be produced using the aluminum-coated steel sheet for hot stamping.

FIG. 1

EP 4 667 600 A1

**Description**

TECHNICAL FIELD

The present invention relates to a hot-stamp formed body and an aluminum-coated steel sheet for hot stamping.
Priority is claimed on Japanese Patent Application No. 2023-022724, filed on February 16, 2023, the content of which is incorporated herein by reference.

BACKGROUND ART

In recent years, there has been a demand for a reduction in weight of a vehicle body of a vehicle from the viewpoint of environmental protection and resource saving, and a high strength steel sheet has been increasingly applied to vehicle body components. A vehicle body component is produced by press forming. With an increase in strength of a steel sheet forming a vehicle body component, not only a forming load during press forming is increased but also formability deteriorates. For this reason, in a case where a high strength steel sheet is subjected to press forming, the formability of the high strength steel sheet into a member having a complicated shape becomes a problem.
In order to solve the above-described problem, the application of hot stamping technology in which press forming is performed after a steel sheet is heated up to a high temperature of an austenite range where the steel sheet softens is in progress. Hot stamping has attracted attention as technology that achieves both forming into a vehicle body component and ensuring a strength by performing a hardening treatment in a die simultaneously with press forming.
In a case where a steel sheet that has a reduced thickness to reduce the weight of a vehicle body is applied to a vehicle body component and the steel sheet is corroded and reduced in thickness during use as the vehicle body component, the performance as a vehicle body component decreases. In order to prevent a decrease in performance due to corrosion, an aluminum-coated steel sheet that is a steel sheet with an aluminum coating applied thereon is applied to a vehicle body component.
For example, Patent Document 1 discloses an aluminum-coated steel sheet for hot pressing with excellent heat resistance and corrosion resistance, which has an Al-based metal coating containing Al mainly and containing Si: 1% to 15% and Mg: 0.5% to 10% on a surface of steel.

Citation List

Patent Document

Patent Document 1: Japanese Unexamined Patent Application, First Publication No. 2003-034845

SUMMARY OF INVENTION

Technical Problem

In order to realize a reduction in weight of a vehicle body due to a further reduction in thickness, it is required to further increase the corrosion resistance of the aluminum-coated steel sheet.
The present invention has been made in view of the above circumstances. An object of the present invention is to provide a hot-stamp formed body having a high strength and excellent corrosion resistance, and an aluminum-coated steel sheet for hot stamping with which the hot-stamp formed body can be produced.

Solution to problem

The gist of the present invention is as follows.

[1] A hot-stamp formed body according to an aspect of the present invention, containing:

a steel sheet;
a diffusion layer provided onto the steel sheet; and
an Fe-Al alloy layer provided onto the diffusion layer,
in which a chemical composition of the steel sheet contains, by mass%,
C: 0.050% to 0.250%,
Si: 0.010% to 2.000%,
Mn: 0.80% to 3.00%,

P: 0.100% or less,
S: 0.0100% or less,
Al: 0.001% to 0.500%,
N: 0.0001% to 0.0150%,
O: 0.1000% or less,
Ti: 0.005% to 0.100%,
B: 0.0005% to 0.0050%,
Cu: 0.050% to 3.000%,
As: 0.0005% to 1.0000%,
Cr: 0% to 1.000%,
Mo: 0% to 1.000%,
Ni: 0% to 3.000%,
Co: 0% to 0.5000%,
W: 0% to 3.0000%,
Sn: 0% to 0.5000%,
Nb: 0% to 0.1000%,
V: 0% to 0.100%,
Zr: 0% to 0.100%,
Ca: 0% to 0.0050%,
Mg: 0% to 0.0050%,
REM: 0% to 0.0050%,
Sb: 0% to 0.0200%,
Pb: 0% to 0.0100%, and
a remainder comprising Fe and impurities,
a microstructure of the steel sheet contains of, by area%,
90.0% to 100.0% of martensite,
0.0% to 3.0% of residual austenite, and
0.0% to 10.0% in total of one or two or more of ferrite, pearlite, bainite, and cementite,
a chemical composition of the diffusion layer contains, by mass%,
Al: more than 0.5% and less than 20.0%,
Fe: more than 80.0% and less than 99.5%, and
Si: 0.0% to 15.0%,
a Cu concentration in the diffusion layer satisfies Expressions (1) and (2),
an average thickness of the diffusion layer satisfies Expression (3), and
the Fe-Al alloy layer includes an Fe-Al phase having an Fe content of 40 to 60 mass% by mass% and an Al content of 40% to 60% by mass%.

$$0.025 \leq Cu_d \, ... \, (1)$$

$$Cu_m < Cu_d < Cu_0 \, ... \, (2)$$

$$2.0 \leq T_d \leq 0.8 \times (T_d + T_m) \, ... \, (3)$$

In Expressions (1) and (2), $Cu_d$ denotes a Cu concentration in the diffusion layer by atom%, $Cu_m$ denotes a Cu concentration in the Fe-Al phase in the Fe-Al alloy layer by atom%, and $Cu_0$ denotes a Cu concentration in the steel sheet by atom%.

In Expression (3), $T_d$ denotes an average thickness in $\mu$m of the diffusion layer, and $T_m$ denotes an average thickness in $\mu$m of the Fe-Al alloy layer.

[2] In the hot-stamp formed body according to [1], the chemical composition of the steel sheet may contain, by mass%,

one or more selected from the group consisting of
Cr: 0.020% to 1.000%,
Mo: 0.008% to 1.000%,
Ni: 0.005% to 3.000%,
Co: 0.0005% to 0.5000%,
W: 0.0005% to 3.0000%,

Sn: 0.0005% to 0.5000%,
Nb: 0.0002% to 0.1000%,
V: 0.005% to 0.100%,
Zr: 0.005% to 0.100%,
Ca: 0.0005% to 0.0050%,
Mg: 0.0005% to 0.0050%,
REM: 0.0005% to 0.0050%,
Sb: 0.0005% to 0.0200%, and
Pb: 0.0003% to 0.0100%.

[3] An aluminum-coated steel sheet for hot stamping according to another aspect of the present invention, containing:

a steel sheet;
an Fe-Al-Si alloy layer provided onto the steel sheet; and
an Al-based coating layer provided onto the Fe-Al-Si alloy layer,
in which a chemical composition of the steel sheet contains, by mass%,
C: 0.050% to 0.250%,
Si: 0.010% to 2.000%,
Mn: 0.80% to 3.00%,
P: 0.100% or less,
S: 0.0100% or less,
Al: 0.001% to 0.500%,
N: 0.0001% to 0.0150%,
O: 0.1000% or less,
Ti: 0.005% to 0.100%,
B: 0.0005% to 0.0050%,
Cu: 0.050% to 3.000%,
As: 0.0005% to 1.0000%,
Cr: 0% to 1.000%,
Mo: 0% to 1.000%,
Ni: 0% to 3.000%,
Co: 0% to 0.5000%,
W: 0% to 3.0000%,
Sn: 0% to 0.5000%,
Nb: 0% to 0.1000%,
V: 0% to 0.100%,
Zr: 0% to 0.100%,
Ca: 0% to 0.0050%,
Mg: 0% to 0.0050%,
REM: 0% to 0.0050%,
Sb: 0% to 0.0200%,
Pb: 0% to 0.0100%, and
a remainder comprising Fe and impurities,
a microstructure of the steel sheet contains of, by area%,
20% to 95% of ferrite, and
5% to 80% in total of one or two or more of martensite, bainite, pearlite, and cementite,
a Cu concentration in the Fe-Al-Si alloy layer satisfies Expression (4), and
a chemical composition of the Al-based coating layer contains, by mass%,
Al: 85.0% to 95.0%, and
Si: 5.0% to 15.0%.

$$Cu_i \leq 0.40 \times Cu_0 \ ... \ (4)$$

In Expression (4), $Cu_i$ denotes a Cu concentration in the Fe-Al-Si alloy layer by atom%, and $Cu_0$ denotes a Cu concentration in the steel sheet by atom%.
[4] In the aluminum-coated steel sheet for hot stamping according to [3],

the chemical composition of the steel sheet may contain, by mass%,
one or more selected from the group consisting of

Cr: 0.020% to 1.000%,
Mo: 0.008% to 1.000%,
Ni: 0.005% to 3.000%,
Co: 0.0005% to 0.5000%,
W: 0.0005% to 3.0000%,
Sn: 0.0005% to 0.5000%,
Nb: 0.0002% to 0.1000%,
V: 0.005% to 0.100%,
Zr: 0.005% to 0.100%,
Ca: 0.0005% to 0.0050%,
Mg: 0.0005% to 0.0050%,
REM: 0.0005% to 0.0050%,
Sb: 0.0005% to 0.0200%, and
Pb: 0.0003% to 0.0100%.

Advantageous Effects of Invention

According to the aspect of the present invention, it is possible to provide a hot-stamp formed body having a high strength and excellent corrosion resistance, and an aluminum-coated steel sheet for hot stamping with which the hot-stamp formed body can be produced.

BRIEF DESCRIPTION OF DRAWINGS

[FIG. 1] A schematic diagram showing an example of a cross section of a hot-stamp formed body including an Fe-Al alloy layer, a diffusion layer, and a steel sheet.
[FIG. 2] A schematic diagram showing an example of a cross section of an aluminum-coated steel sheet for hot stamping including an Al-based coating layer, an Fe-Al-Si alloy layer, and a steel sheet.

DESCRIPTION OF EMBODIMENTS

Hereinafter, a hot-stamp formed body and an aluminum-coated steel sheet for hot stamping according to an embodiment will be described in detail.

[Hot-Stamp Formed Body]

A hot-stamp formed body according to the present embodiment contains a steel sheet, a diffusion layer provided onto the steel sheet, and an Fe-Al alloy layer provided onto the diffusion layer.

Steel Sheet

First, the reason why the chemical composition of the steel sheet forming the hot-stamp formed body according to the present embodiment is to be limited will be described.
A limited numerical range described using "to" to be described below includes a lower limit and an upper limit. Numerical values represented using "less than" or "more than" are not included in a numerical range. All percentages (%) related to the chemical composition mean mass%.
The chemical composition of the steel sheet forming the hot-stamp formed body according to the present embodiment contains, by mass%, C: 0.050% to 0.250%, Si: 0.010% to 2.000%, Mn: 0.80% to 3.00%, P: 0.100% or less, S: 0.0100% or less, Al: 0.001% to 0.500%, N: 0.0001% to 0.0150%, O: 0.1000% or less, Ti: 0.005% to 0.100%, B: 0.0005% to 0.0050%, Cu: 0.050% to 3.000%, As: 0.0005% to 1.0000%, and a remainder: Fe and impurities.
Hereinafter, each element will be described in detail.

C: 0.050% to 0.250%

C is an element that significantly affects the strength of the hot-stamp formed body. In a case where the C content is less than 0.050%, the strength of the hot-stamp formed body is reduced. Therefore, the C content is set to 0.050% or more. The C content is preferably 0.070% or more or 0.090% or more.

On the other hand, in a case where the C content is more than 0.250%, the strength of the hot-stamp formed body is too high, and fracture is likely to occur when a vehicle collides. Therefore, the C content is set to 0.250% or less. The C content is preferably less than 0.250%, 0.249% or less, 0.247% or less, or 0.245% or less, and more preferably 0.240% or less.

Si: 0.010% to 2.000%

Si is resistant to temper softening, and has an effect of suppressing a reduction in strength that is caused by auto-tempering during hot stamping hardening. In a case where the Si content is less than 0.010%, the above-described effect cannot be obtained, and the strength of the hot-stamp formed body is reduced. Therefore, the Si content is set to 0.010% or more. The Si content is preferably 0.020% or more, 0.030% or more, 0.150% or more, or 0.200% or more.

On the other hand, in a case where the Si content is more than 2.000%, a problem of surface scale arises. That is, since a pattern caused by surface irregularities is generated after scale generated during hot rolling is pickled, surface appearance becomes inferior. In addition, in a case where the surface of the steel sheet for hot stamping (the steel sheet before application of an aluminum coating) is subjected to a coating treatment, the platability deteriorates. Therefore, the Si content is set to 2.000% or less. The Si content is preferably 1.700% or less, 1.500% or less, or 1.450% or less, and more preferably 1.000% or less or 0.800% or less.

Mn: 0.80% to 3.00%

Mn is an element that improves the strength and the hardenability of steel of the hot-stamp formed body. In a case where the Mn content is less than 0.80%, the strength of the hot-stamp formed body is reduced. Therefore, the Mn content is set to 0.80% or more. The Mn content is preferably 1.00% or more, 1.20% or more, or 1.40% or more.

On the other hand, even though the Mn content is more than 3.00%, the above-described effect is saturated, and the toughness of the hot-stamp formed body deteriorates. Therefore, the Mn content is set to 3.00% or less. The Mn content is preferably 2.80% or less or 2.60% or less, and more preferably 2.40% or less or 2.00% or less.

P: 0.100% or less

P is an element that segregates in grain boundaries and reduces intergranular strength. When the P content is more than 0.100%, the intergranular strength is significantly reduced, and the toughness of the hot-stamp formed body deteriorates. Therefore, the P content is set to 0.100% or less. The P content is preferably 0.080% or less or 0.050% or less.

The lower limit of the P content is not particularly specified, and may be 0%. However, in a case where the P content is excessively reduced, the refining cost increases. Therefore, the P content may be set to 0.001% or more.

S: 0.0100% or less

S is an element that affects non-metal inclusions contained in steel to cause the toughness of the hot-stamp formed body to deteriorate. Therefore, the S content is set to 0.0100% or less. The S content is preferably 0.0080% or less or 0.0050% or less.

The lower limit of the S content is not particularly specified, and may be 0%. However, in a case where the S content is excessively reduced, the manufacture cost increases in a desulfurization step. Therefore, the S content may be set to 0.0001% or more.

Al: 0.001% to 0.500%

Al is an element that is used as a deoxidizing material for molten steel. In a case where deoxidation is insufficient, the toughness of the hot-stamp formed body deteriorates due to excessively formed oxide. In order to sufficiently deoxidize molten steel, the Al content is set to 0.001% or more. The Al content is preferably 0.010% or more or 0.030% or more.

On the other hand, in a case where the Al content is more than 0.500%, a lot of non-metal inclusions are formed. As a result, a surface defect is likely to occur on the hot-stamp formed body. Therefore, the Al content is set to 0.500% or less. The Al content is preferably 0.300% or less, 0.200% or less, or 0.100% or less.

N: 0.0001% to 0.0150%

In a case where the N content is more than 0.0150%, coarse nitride is formed in steel, and the toughness of the hot-stamp formed body significantly deteriorates. Therefore, the N content is set to 0.0150% or less. The N content is preferably 0.0100% or less or 0.0080% or less.

In a case where the N content is reduced to be less than 0.0001%, the denitrification cost increases significantly, which is not preferable economically. Therefore, the N content is set to 0.0001% or more. The N content is preferably 0.0005% or more or 0.0010% or more.

O: 0.1000% or less

In a case where a large amount of O is contained in steel, O forms coarse oxide that serve as fracture origins. As a result, the toughness of the hot-stamp formed body deteriorates. Therefore, the O content is set to 0.1000% or less. The O content is preferably 0.0080% or less or 0.0050% or less.

The lower limit of the O content is not particularly specified, and may be 0%. The O content may be set to 0.0005% or more or 0.0010% or more to disperse a large amount of fine oxide during deoxidation of molten steel.

Ti: 0.005% to 0.100%

Ti forms carbonitride in steel to increase the strength of the hot-stamp formed body by precipitation hardening. Furthermore, Ti has an effect of fixing N as nitride to suppress the formation of BN and developing an effect of improving the hardenability of B. In a case where the Ti content is less than 0.005%, the above-described effect cannot be obtained, and the strength of the hot-stamp formed body is reduced. Therefore, the Ti content is set to 0.005% or more. The Ti content is preferably 0.010% or more, 0.020% or more, or 0.030% or more.

On the other hand, in a case where the Ti content is more than 0.100%, a large amount of carbonitride is formed, and thus the toughness of the hot-stamp formed body deteriorates. Therefore, the Ti content is set to 0.100% or less. The Ti content is preferably 0.080% or less or 0.070% or less.

B: 0.0005% to 0.0050%

B improves the strength of the hot-stamp formed body by improving hardenability during hot stamping or in cooling to be performed after the hot stamping. In a case where the B content is less than 0.0005%, the above-described effect cannot be obtained, and the strength of the hot-stamp formed body is reduced. Therefore, the B content is set to 0.0005% or more. The B content is preferably 0.0007% or more or 0.0010% or more.

On the other hand, in a case where the B content is more than 0.0050%, the above-described effect is saturated, and cracking may occur during hot rolling. Therefore, the B content is set to 0.0050% or less. The B content is preferably 0.0040% or less or 0.0030% or less.

Cu: 0.050% to 3.000%

Cu is an element that increases the corrosion resistance of the steel sheet forming the hot-stamp formed body. In addition, in the hot-stamp formed body according to the present embodiment, the corrosion resistance can be further increased in a case where a desired amount of Cu is contained in the diffusion layer. In a case where the Cu content is less than 0.050%, a desired amount of Cu cannot be contained in the diffusion layer, and the corrosion resistance of the hot-stamp formed body deteriorates. In addition, the corrosion resistance of the steel sheet itself forming the hot-stamp formed body deteriorates. Therefore, the Cu content is set to 0.050% or more. The Cu content is preferably 0.070% or more, 0.100% or more, 0.120% or more, or 0.150% or more.

On the other hand, in a case where the Cu content is more than 3.000%, carbide present after hot rolling, after cold rolling, or after annealing (including even after coating treatment) is stabilized and the melting of carbide in heating during hot stamping is delayed, so that the hardenability is reduced. As a result, the strength of the hot-stamp formed body may be reduced. Therefore, the Cu content is set to 3.000% or less. The Cu content is preferably 2.800% or less or 2.600% or less.

As: 0.0005% to 1.0000%

As has an effect of inhibiting the movement of grain boundaries to suppress grain growth. Therefore, a ferrite grain size after annealing and a prior austenite grain size after hot stamping are reduced, and thus the strength of the hot-stamp formed body is improved. In a case where the As content is less than 0.0005%, the strength of the hot-stamp formed body is reduced. Therefore, the As content is set to 0.0005% or more. The As content is preferably 0.0050% or more.

On the other hand, in a case where the As content is more than 1.0000%, hot ductility is reduced, and thus cracking occurs during casting and hot rolling. Therefore, the As content is set to 1.0000% or less. The As content is preferably 0.5000% or less, 0.1000% or less, or 0.0100% or less.

The remainder of the chemical composition of the hot-stamp formed body according to the present embodiment may be Fe and impurities. Elements, which are unavoidably mixed from a steel raw material or scrap and/or during steelmaking and are allowed in a range where the properties of the hot-stamp formed body according to the present embodiment do not deteriorate, are exemplary examples of the impurities.

The chemical composition of the hot-stamp formed body according to the present embodiment may contain the following elements as any elements, instead of a part of Fe. In a case where the following any elements are not contained, the content is 0%.

Cr: 0.020% to 1.000%

Mo: 0.008% to 1.000%

Ni: 0.005% to 3.000%

Cr, Mo, and Ni are elements that improve the hardenability of steel, and have an effect of improving the strength of the hot-stamp formed body. In addition, these elements have an effect of improving the corrosion resistance of the hot-stamp formed body. Therefore, one or two or more of these elements may be contained as necessary. In order to reliably exhibit the above-described effect, it is preferable that the Cr content be set to 0.020% or more, the Mo content be set to 0.008% or more, or the Ni content be set to 0.005% or more. The Cr content is more preferably 0.040% or more or 0.100% or more. The Mo content is more preferably 0.010% or more or 0.020% or more. The Ni content is more preferably 0.010% or more or 0.020% or more.

On the other hand, in a case where the Cr content or the Mo content is more than 1.000% or the Ni content is more than 3.000%, carbide present after hot rolling, after cold rolling, or after annealing (including even after coating treatment) is stabilized and the melting of carbide in heating during hot stamping is delayed, so that the hardenability may be reduced. As a result, the strength of the hot-stamp formed body may be reduced. Therefore, the Cr content and the Mo content are each set to 1.000% or less, and the Ni content is set to 3.000% or less. The Cr content and the Mo content are each preferably 0.700% or less or 0.500% or less. The Ni content is preferably 2.000% or less or 1.500% or less.

Co: 0.0005% to 0.5000%

Co is an element that improves the corrosion resistance in a corrosive environment. Therefore, Co may be contained as necessary. In order to reliably exhibit the above-described effect, the Co content is preferably set to 0.0005% or more. The Co content is more preferably 0.0010% or more or 0.0020% or more.

On the other hand, in a case where the Co content is more than 0.5000%, the above-described effect is saturated, and economic efficiency is lowered. Therefore, the Co content is set to 0.5000% or less. The Co content is more preferably 0.4000% or less.

W: 0.0005% to 3.0000%

W is an element that suppresses phase transformation at a high temperature, and contributes to the improvement of the strength of the hot-stamp formed body. In addition, W has an effect of improving the corrosion resistance of the hot-stamp formed body. Therefore, W may be contained as necessary. In order to reliably exhibit these effects, the W content is preferably set to 0.0005% or more. The W content is more preferably 0.0010% or more or 0.0030% or more.

On the other hand, in a case where the W content is more than 3.0000%, productivity may be lowered or the strength of the hot-stamp formed body may be reduced due to the deterioration of hot workability. Therefore, the W content is set to 3.0000% or less. The W content is preferably 2.5000% or less or 2.0000% or less.

Sn: 0.0005% to 0.5000%

Sn has an effect of improving the corrosion resistance of the hot-stamp formed body. Therefore, Sn may be contained as necessary. In order to reliably exhibit this effect, the Sn content is preferably set to 0.0005% or more. The Sn content is more preferably 0.0010% or more, 0.0030% or more, or 0.0050% or more.

On the other hand, since the above-described effect is saturated even though the Sn content is more than 0.5000%, the Sn content is set to 0.5000% or less. The Sn content is preferably 0.4000% or less, 0.3000% or less, or 0.2000% or less.

Nb: 0.0002% to 0.1000%

Nb refines the grains of a structure as a solute element to increase the strength of the hot-stamp formed body. Therefore, Nb may be contained as necessary. In order to reliably exhibit this effect, the Nb content is preferably set to 0.0002% or more. The Nb content is more preferably 0.0005% or more, 0.0010% or more, or 0.0030% or more.
On the other hand, in a case where the Nb content is more than 0.1000%, a large amount of carbonitride is formed, and thus the toughness of the hot-stamp formed body deteriorates. Therefore, the Nb content is set to 0.1000% or less. The Nb content is preferably 0.0800% or less or 0.0700% or less.

V: 0.005% to 0.100%

V has an effect of forming carbonitride in steel to improve the strength of the hot-stamp formed body via precipitation hardening. Furthermore, V is also a solute element and has an effect of improving the strength and the bendability of the hot-stamp formed body by refining the grains of a structure. Therefore, V may be contained as necessary. In order to reliably exhibit the above-described effect, the V content is preferably set to 0.005% or more. The V content is more preferably 0.010% or more or 0.020% or more.
On the other hand, in a case where the V content is more than 0.100%, a large amount of carbonitride is formed, and thus the bendability of the hot-stamp formed body deteriorates. Therefore, the V content is set to 0.100% or less. The V content is preferably 0.070% or less or 0.050% or less.

Zr: 0.005% to 0.100%

Zr has an effect of forming carbonitride in steel to improve the strength of the hot-stamp formed body via precipitation hardening. Furthermore, Zr has an effect of fixing N as nitride to suppress the formation of BN and developing an effect of improving the hardenability of B. Therefore, Zr may be contained as necessary. In order to reliably exhibit the above-described effect, the Zr content is preferably set to 0.005% or more. The Zr content is more preferably 0.010% or more or 0.020% or more.
On the other hand, in a case where the Zr content is more than 0.100%, a large amount of carbonitride is formed, and thus the bendability of the hot-stamp formed body deteriorates. Therefore, the Zr content is set to 0.100% or less. The Zr content is preferably 0.070% or less or 0.050% or less.

Ca: 0.0005% to 0.0050%

Mg: 0.0005% to 0.0050%

REM: 0.0005% to 0.0050%

Ca, Mg, and REM have an effect of refining inclusions contained in steel and preventing the occurrence of cracking during hot stamping that is caused by inclusions. Therefore, one or two or more of these elements may be contained as necessary. In order to reliably exhibit the above-described effect, the amount of even one of Ca, Mg, and REM is preferably set to 0.0005% or more. The Ca content, the Mg content, and the REM content are each more preferably 0.0010% or more.
On the other hand, in a case where the Ca content, the Mg content, or the REM content is more than 0.0050%, the effect of refining inclusions contained in steel is saturated, and the alloy cost increases. Accordingly, the Ca content, the Mg content, and the REM content are each set to 0.0050% or less. The Ca content, the Mg content, and the REM content are each preferably 0.0040% or less, 0.0030% or less, or 0.0020% or less.
In the present embodiment, REM refers to a total of 17 elements including Sc, Y, and lanthanoid, and the REM content refers to a total amount of these elements.

Sb: 0.0005% to 0.0200%

Sb may be contained as necessary to suppress hot decarburization. Due to Sb contained, decarburization during hot rolling can be suppressed. In order to reliably exhibit this effect, the Sb content is preferably set to 0.0005% or more. The Sb content is more preferably 0.0010% or more or 0.0050% or more.
On the other hand, since the above-described effect is saturated even though the Sb content is more than 0.0200%, the Sb content is set to 0.0200% or less. The Sb content is preferably 0.0150% or less or 0.0100% or less.

Pb: 0.0003% to 0.0100%

Pb has an effect of suppressing the growth of austenite grains in a heating step in hot stamping, and thus may be contained as necessary. In order to reliably exhibit this effect, the Pb content is preferably set to 0.0003% or more. The Pb content is more preferably 0.0005% or more.

On the other hand, in a case where the Pb content is set to more than 0.0100%, there is a concern that the hot ductility may be reduced and a surface defect may thus be generated in a hot rolling step. Therefore, the Pb content is set to 0.0100% or less. The Pb content is preferably 0.0080% or less.

The chemical composition of the hot-stamp formed body described above may be measured by a general analysis method. For example, the chemical composition may be measured using inductively coupled plasma-atomic emission spectrometry (ICP-AES). In addition, C and S may be measured using a combustion-infrared absorption method, N may be measured using an inert gas fusion-thermal conductivity method, and O may be measured using an inert gas fusion-nondispersive infrared absorption method.

The chemical composition is analyzed after the diffusion layer and the Fe-Al alloy layer on the surface of the hot-stamp formed body are removed by mechanical grinding.

Next, the microstructure of the steel sheet forming the hot-stamp formed body according to the present embodiment will be described. The microstructure of the steel sheet forming the hot-stamp formed body according to the present embodiment contains, by area%, 90.0% to 100.0% of martensite, 0.0% to 3.0% of residual austenite, and 0.0% to 10.0% in total of one or two or more of ferrite, pearlite, bainite, and cementite.

In the present embodiment, the microstructure at a 1/4 thickness position of the steel sheet forming the hot-stamp formed body (a region between a 1/8 thickness depth from the surface of the steel sheet and a 3/8 thickness depth from the surface) is specified. The reason for that is that the microstructure at this position indicates a typical microstructure of the steel sheet forming the hot-stamp formed body.

Martensite: 90.0% to 100.0%

Martensite is a structure that increases the strength of the hot-stamp formed body. In a case where the area ratio of the martensite is less than 90.0%, the strength of the hot-stamp formed body is reduced. Therefore, the area ratio of the martensite is set to 90.0% or more. The area ratio of the martensite is preferably 93.0% or more, 95.0% or more, or 97.0% or more. Since the area ratio of the martensite is preferably as high as possible, the area ratio of the martensite may be 100.0%.

Residual Austenite: 0.0% to 3.0%

Residual austenite is a structure that increases the ductility and the like of the hot-stamp formed body. However, in a case where an area ratio thereof is too high, the strength of the hot-stamp formed body is reduced. In a case where the area ratio of the residual austenite is more than 3.0%, the strength of the hot-stamp formed body is significantly reduced. Therefore, the area ratio of the residual austenite is set to 3.0% or less. The area ratio of the residual austenite is preferably 2.0% or less, more preferably 1.0% or less, and still more preferably 0.0%.

Remainder in Microstructure: 0.0% to 10.0% in total

The remainder in microstructure includes one or two or more of ferrite, pearlite, bainite, and cementite. The area ratio of the remainder in microstructure is set to 10.0% or less in total in relation to the area ratio of the martensite. The area ratio of the remainder in microstructure is preferably set to 7.0% or less, 5.0% or less, or 3.0% or less in total. Since the area ratio of the remainder in microstructure is preferably as low as possible, the area ratio of the remainder in microstructure may be 0.0% in total.

The area ratio of each structure is measured by the following method.

A sample is cut out from the hot-stamp formed body so that a 1/4 thickness position (a region between a 1/8 thickness depth from the surface and a 3/8 thickness depth from the surface) can be observed in a sheet thickness cross section perpendicular to the surface. After the cross section of the sample taken in the sheet thickness direction is polished in stages using silicon carbide paper having a grit of #600 to #1500, the cross section of the sample is finished as a mirror surface using a liquid in which a diamond powder having a grain size of 1 to 6 $\mu$m is dispersed in a diluted solution of alcohol or the like or pure water, and Nital etching is performed thereon. Using 2% Nital (2% nitric acid-ethyl alcohol solution) as a reagent, the sample was immersed therein at room temperature for 10 seconds or shorter.

Next, at any position in a direction perpendicular to the sheet thickness direction in a sample cross section, secondary electron images are captured in at least five visual fields at a 1/4 thickness position using a thermal field-emission-type scanning electron microscope (for example, JSM-7001F manufactured by JEOL Ltd.). The accelerating voltage is set to 15 kV, and the working distance is set to 10 mm. Evenly spaced grids are drawn in the reflected electron image, and structures at grid points are identified. The number of grid points corresponding to each structure is obtained and is divided by the total number of grid points, so that the area ratio of each structure is obtained. The area ratio can be more accurately obtained as the total number of grid points is larger. In the present embodiment, grid spacings are set to 2 μm × 2 μm and the total number of grid points is set to 1500. The magnification may be selected so that the microstructure can be sufficiently determined, and is preferably set to 2000 times.

The diffusion layer, the Fe-Al alloy layer, and the steel sheet can be distinguished from one another due to the differences in brightness in a reflected electron image. In the reflected electron image, a region positioned closest to the thickness center is the steel sheet, and the area ratio of each structure is measured in the steel sheet. The reflected electron image can be acquired by observing under the same conditions using the same electron microscope as that used for the secondary electron image, and switching a detector.

In image analysis of the secondary electron image, each structure can be determined by the following method.

Ferrite can be determined as a phase that forms roughly equiaxed grains and contains no carbide inside.

A region in which cementite is precipitated in a lamellar shape in the grains is determined as pearlite.

A granular region in which brightness is high and a grain size (circle equivalent diameter) is 2 μm or less is determined as cementite.

A region in which a lath-shaped structure appears in the grains by etching is determined as martensite. Examples of the observation of the martensite structure are provided in the following documents.

Tadashi Maki and Imao Tamura: Iron and Steel, Vol. 67, No. 1, 1987, Pages 852-866.

Hajime Suto, Imao Tamura, and Taiji Nishizawa: Metallography, published by Maruzen Group, 1977, Page 170.

William C. Leslie: The Physical Metallurgy of Steels, Hemisphere Publishing Corporation, 1981, page 215.

A region that does not correspond to any of the above-described structures is determined as bainite.

Whether the microstructure contains 90% or more of martensite can also be determined by the Vickers hardness. A sample is cut out from the hot-stamp formed body so that a 1/4 thickness position (a region between a 1/8 thickness depth from the surface and a 3/8 thickness depth from the surface) can be observed in a sheet thickness cross section perpendicular to the surface. After the cross section of the sample taken in the sheet thickness direction is polished in stages using silicon carbide paper having a grit of #600 to #1500, the cross section of the sample is finished as a mirror surface using a liquid in which a diamond powder having a grain size of 1 to 6 μm is dispersed in a diluted solution of alcohol or the like or pure water, and the Vickers hardness is measured at the 1/4 thickness position. The test force is set to 98.07 N, and an average value of values measured at five points is obtained. In a case where average Vickers hardness H satisfies $H(HV) \geq 764 \times C + 208$, it can be determined that the area ratio of martensite is 90.0% or more. In the present embodiment, in a case where martensite cannot be clearly determined by image analysis or there is doubt in the determination of the structure, the area ratio of the martensite is determined by the Vickers hardness.

The area ratio of the residual austenite is measured by X-ray diffraction. At a 1/4 surface position (a region between a 1/8 thickness depth from the surface and a 3/8 thickness depth from the surface) in a cross section of the hot-stamp formed body taken in the sheet thickness direction perpendicular to the surface, integrated intensities of a total of 5 peaks of $\alpha(200)$, $\alpha(211)$, $\gamma(200)$, $\gamma(220)$, and $\gamma(311)$ are obtained using RINT-2200 with Mo-Kα radiation, manufactured by Rigaku Corporation, and the volume percentage of the residual austenite is calculated using a strength-averaging method. The volume percentage of the residual austenite is regarded as an area ratio of the residual austenite.

In the present embodiment, since the area ratios of the structures are measured by structure observation using secondary electron images and X-ray diffraction, the total of the area ratios of the structures obtained by the measurement may not be 100.0%. In a case where the total of the area ratios of the structures obtained by the above-described method does not reach 100.0%, the area ratios of the structures are converted so that the total of the area ratios of the structures reaches 100.0%. For example, in a case where the total of the area ratios of the structures is 103.0%, the area ratio of each structure is multiplied by "100.0/103.0" to obtain the area ratio of each structure.

Diffusion Layer

The diffusion layer is provided between the above-described steel sheet and the Fe-Al alloy layer to be described later. A chemical composition of the diffusion layer includes, by mass%, Al: more than 0.5% and less than 20.0%, Fe: more than 80.0% and less than 99.5%, and Si: 0.0% to 15.0%, a Cu concentration in the diffusion layer satisfies Expressions (1) and (2), and an average thickness of the diffusion layer satisfies Expression (3).

$$0.025 \leq Cu_d \ ... \ (1)$$

$$Cu_m < Cu_d < Cu_0 \ ... \ (2)$$

$$2.0 \leq T_d \leq 0.8 \times (T_d + T_m) \ldots (3)$$

In Expressions (1) and (2), $Cu_d$ denotes a Cu concentration in the diffusion layer by atom%, $Cu_m$ denotes a Cu concentration in an Fe-Al phase in the Fe-Al alloy layer by atom%, and $Cu_0$ denotes a Cu concentration in the steel sheet by atom%.

In Expression (3), $T_d$ denotes an average thickness in $\mu m$ of the diffusion layer, and $T_m$ denotes an average thickness in $\mu m$ of the Fe-Al alloy layer.

The diffusion layer is a layer in which Al is diffused in Fe, and the Al content in the diffusion layer is set to more than 0.5%. The Al content in the diffusion layer is preferably 1.0% or more or 5.0% or more.

On the other hand, in a case where the Al content in the diffusion layer is 20.0% or more, an Fe-Al phase and a $\tau_1$ phase are generated in the diffusion layer, and a desired diffusion layer cannot be obtained. Therefore, the Al content in the diffusion layer is set to less than 20.0%.

The Fe content in the diffusion layer is set to more than 80.0% and less than 99.5% in relation to the Al content.

The Si content in the diffusion layer is set to 0.0% to 15.0%. Since Si may or may not be contained in the diffusion layer, the lower limit of the Si content is 0.0%. In a case where the Si content in the diffusion layer is more than 15.0%, an Fe-Al phase and a $\tau_1$ phase are generated in the diffusion layer, and a desired diffusion layer cannot be obtained.

The chemical composition of the diffusion layer may include, as elements other Al, Fe, Si, and Cu to be described later, remainder elements (Zn, Cu, Na, K, Co, Ni, Mg, and elements contained in the steel component) in a total amount of less than 10.0%.

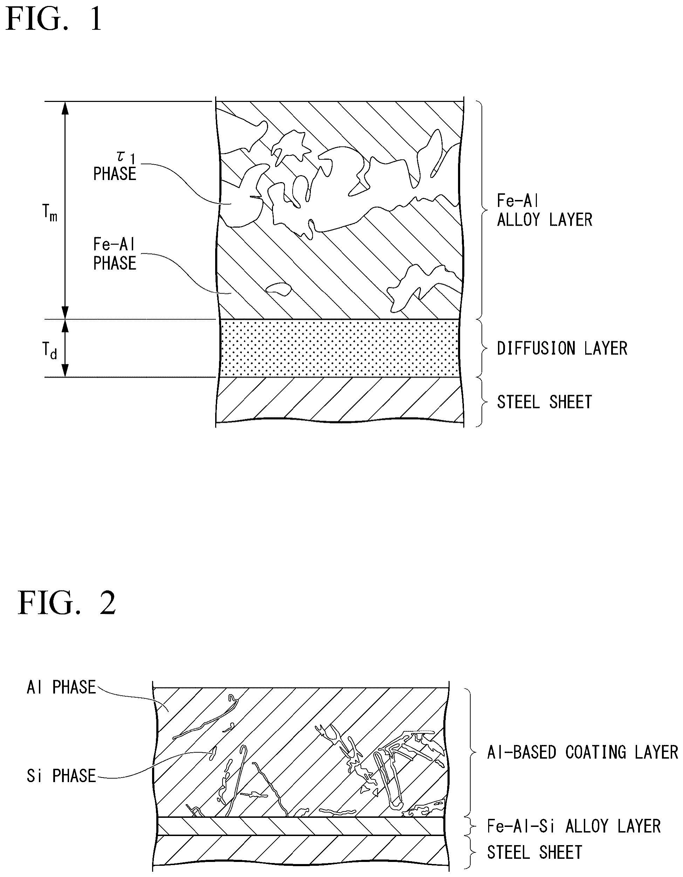

The diffusion layer contains Cu in addition to the above-described elements. FIG. 1 is a schematic diagram showing an example of a cross section of the hot-stamp formed body including the Fe-Al alloy layer, the diffusion layer, and the steel sheet. As shown in FIG. 1, the Fe-Al alloy layer includes an Fe-Al phase mainly containing Fe and Al, and a $\tau_1$ phase containing Si. In addition, the diffusion layer is present between the Fe-Al alloy layer and the steel sheet.

As will be described later, the Fe-Al phase in the Fe-Al alloy layer contains 40 to 60 mass% of Fe and 40 to 60 mass% of Al.

The present inventors have obtained the following findings regarding the diffusion layer.

In a case where the diffusion layer has a high Cu concentration, a corrosion potential difference occurs between the Fe-Al phase in the Fe-Al alloy layer that is present closer to the surface side than the diffusion layer and the diffusion layer, so that a sacrificial protection effect can be obtained. This effect suppresses a corrosion pit reaching the steel sheet, and the corrosion depth can be suppressed. As a result, the corrosion resistance of the hot-stamp formed body is improved.

In a case where the Cu concentration ($Cu_d$) in the diffusion layer is less than 0.025 atom%, the above-described effect cannot be obtained, and the corrosion resistance of the hot-stamp formed body deteriorates. Therefore, the Cu concentration ($Cu_d$) in the diffusion layer is set to 0.025 atom% or more. The Cu concentration ($Cu_d$) in the diffusion layer is preferably 0.040 atom% or more, 0.060 atom% or more, or 0.100 atom% or more.

In a case where the Cu concentration ($Cu_d$) in the diffusion layer is equal to or less than the Cu concentration ($Cu_m$) in the Fe-Al phase in the Fe-Al alloy layer, the sacrificial protection effect by the Fe-Al phase in the Fe-Al alloy layer in the diffusion layer does not occur. As a result, the corrosion resistance of the hot-stamp formed body deteriorates. Therefore, the Cu concentration ($Cu_d$) in the diffusion layer is set to be more than the Cu concentration ($Cu_m$) in the Fe-Al phase in the Fe-Al alloy layer.

On the other hand, long-time heating is required during hot stamping to set the Cu concentration ($Cu_d$) in the diffusion layer to be equal to or more than the Cu concentration ($Cu_0$) in the steel sheet. As a result, the average thickness of the diffusion layer becomes too large, and thus it is not possible to control the average thickness of the diffusion layer within a desired range. In addition, the sacrificial protection effect of the diffusion layer for the steel sheet is not exhibited. Therefore, the Cu concentration ($Cu_d$) in the diffusion layer is set to less than the Cu concentration ($Cu_0$) in the steel sheet.

In a case where an average thickness $T_d$ of the diffusion layer is less than 2.0 $\mu m$, the diffusion layer is too thin. Therefore, the sacrificial protection effect is not sufficiently exhibited, and thus the corrosion resistance of the hot-stamp formed body deteriorates. Therefore, the average thickness $T_d$ of the diffusion layer is set to 2.0 $\mu m$ or more. The average thickness $T_d$ of the diffusion layer is preferably 3.0 $\mu m$ or more or 4.0 $\mu m$ or more.

In a case where the average thickness $T_d$ of the diffusion layer is more than $0.8 \times (T_d + T_m)$ ($T_d$ denotes an average thickness in $\mu m$ of the diffusion layer, and $T_m$ denotes an average thickness in $\mu m$ of the Fe-Al alloy layer), the diffusion layer becomes too thick, and a corrosion potential difference is less likely to occur between the Fe-Al phase in the Fe-Al alloy layer and the diffusion layer, so that the sacrificial protection effect is not sufficiently exhibited. As a result, the corrosion resistance of the hot-stamp formed body deteriorates. Therefore, the average thickness $T_d$ of the diffusion layer is set to $0.8 \times (T_d + T_m)$ ($\mu m$) or less. The average thickness $T_d$ of the diffusion layer is preferably $0.7 \times (T_d + T_m)$ ($\mu m$) or less or $0.6 \times (T_d + T_m)$ ($\mu m$) or less.

Fe-Al Alloy Layer

The Fe-Al alloy layer is provided onto the above-described diffusion layer. In the present embodiment, the Fe-Al alloy layer is not particularly limited.

As described above, the Fe-Al alloy layer may include an Fe-Al phase mainly containing Fe and Al and a $\tau_1$ phase containing Si. The Fe-Al phase contains 40 to 60 mass% of Fe and 40 to 60 mass% of Al. In addition, the $\tau_1$ phase contains 50 to 77 mass% of Fe, 20 to 40 mass% of Al, and 3 to 10 mass% of Si.

Specifically, the Fe-Al phase in the Fe-Al alloy layer includes one or more of an $FeAl_2$ phase and an $Fe_2Al_5$ phase. In the present embodiment, it is not necessary to distinguish these phases.

The chemical composition of the Fe-Al alloy layer may include Fe: 25 to 80 mass%, Al: 20 to 60 mass%, Si: 0 to 10 mass%, and a remainder: less than 5 mass%.

The average thickness of the Fe-Al alloy layer is not particularly limited, and may be set to 5 to 60 $\mu$m.

The chemical compositions of the diffusion layer and the Fe-Al alloy layer and the Cu concentration in the steel sheet are measured by the following methods.

A reflected electron image is captured of a cross section of the hot-stamp formed body taken in the sheet thickness direction perpendicular to the surface in the same manner as when the microstructural fraction of the microstructure of the steel sheet forming the hot-stamp formed body is measured. In the obtained reflected electron image, the two layers provided on the surface side, and the steel sheet that is a region positioned closest to the thickness center are distinguished from one another by the differences in brightness. In this case, the layer provided closest to the surface is regarded as the Fe-Al alloy layer, and the layer provided between the Fe-Al alloy layer and the steel sheet is regarded as the diffusion layer.

A center portion in the thickness of the portion regarded as the diffusion layer is subjected to quantitative analysis of elements (Al, Fe, and Si) by point analysis using an electron probe microanalyzer (EPMA, for example, "JXA-8530F" manufactured by JEOL Ltd.) from the reflected electron image. In a case where this measurement is performed, a device (for example, "JXA-8530F" manufactured by JEOL Ltd.) having a field-emission electron gun is used, and the beam diameter is set to less than 1 $\mu$m. For the quantitative correction, a ZAF correction method is used. The quantitative analysis is performed at least five points, and an average value of the obtained results is calculated to obtain the amount and the concentration of each element. In the measurement result of the layer regarded as the diffusion layer, in a case where the chemical composition includes, by mass%, Al: more than 0.5% and less than 20.0%, Fe: more than 80.0% and less than 99.5%, and Si: 0.0% to 15.0%, the layer is determined as the diffusion layer. The Cu concentration in the layer determined as the diffusion layer is measured in the same manner, and thus the Cu concentration ($Cu_d$) in the diffusion layer is obtained in atom%.

A center portion in the portion regarded as the Fe-Al alloy layer is subjected to quantitative analysis of elements in the same manner as described above from the reflected electron image. In the measurement result of the layer determined as the Fe-Al alloy layer, in a case where the chemical composition includes, by mass%, Fe: 25% to 80%, Al: 20% to 60%, Si: 0% to 10%, and a remainder: less than 5%, the layer is determined as the Fe-Al alloy layer.

In addition, in the layer determined as the Fe-Al alloy layer, a region containing 40 to 60 mass% of Fe and 40 to 60 mass% of Al is specified from the above-described quantitative analysis result. This region is determined as an Fe-Al phase. The Cu concentration in the region determined as the Fe-Al phase is measured in the same manner as described above, and thus the Cu concentration ($Cu_m$) in the Fe-Al phase is obtained in atom%.

The Cu concentration in a center portion (a center portion of the steel sheet in the reflected electron image) in a portion regarded as the steel sheet is measured in the same manner as described above from the reflected electron image, and thus the Cu concentration ($Cu_0$) in the steel sheet is obtained in atom%.

Next, a method of measuring the average thicknesses of the diffusion layer and the Fe-Al alloy layer will be described.

The Fe-Al alloy layer, the diffusion layer, and the steel sheet are distinguished from one another in the same manner as when the chemical compositions of the diffusion layer and the Fe-Al alloy layer of the hot-stamp formed body and the Cu concentration in the steel sheet are measured. In a layer portion determined as the diffusion layer, the thickness of the layer in a sheet thickness direction is measured at 25 points (within a range of 50 $\mu$m in a direction perpendicular to the sheet thickness direction) at intervals of 2 $\mu$m in the direction perpendicular to the sheet thickness direction on the reflected electron image. By calculating an average value of the obtained 25 values, the average thickness of the diffusion layer is obtained. The measurement is performed in the same manner for the Fe-Al alloy layer, and thus the average thickness of the Fe-Al alloy layer is obtained.

Sheet Thickness

The sheet thicknesses of the hot-stamp formed body according to the present embodiment is not particularly limited, and may be set to 0.5 to 3.5 mm from the viewpoint of reducing the weight of a vehicle body.

Tensile Strength

The tensile strength of the hot-stamp formed body according to the present embodiment may satisfy the following criteria according to the C content of the steel sheet.

C Content of 0.050 mass% or more and less than 0.100%: 900 MPa or more
C Content of 0.100 mass% or more and less than 0.200%: 1100 MPa or more
C Content of 0.200 mass% or more and 0.250% or less: 1350 MPa or more

In a case where the tensile strength is controlled as described above, the effect of reducing the weight of a vehicle body can be further increased.

The upper limit of the tensile strength is not particularly limited. However, in a case where the tensile strength is too high, the bendability deteriorates. Therefore, the tensile strength may be set to 1700 MPa or less.

A No. 5 test piece disclosed in JIS Z 2241:2022 is prepared and a tensile strength is obtained according to a test method disclosed in JIS Z 2241:2022. A collecting position of the tensile test piece is set to a center position in a sheet width direction, and a direction perpendicular to the rolling direction is set as a longitudinal direction. In a case where the rolling direction and the sheet width direction of the hot-stamp formed body are unknown, any direction may be regarded as the rolling direction, and a direction perpendicular to the rolling direction may be regarded as the sheet width direction.

In a case where the No. 5 test piece cannot be collected since the hot-stamp formed body has a small size or a complicated shape, a strip-shaped small piece having a parallel portion with any width may be collected, a tensile test may be performed using the small piece, and a tensile strength may be obtained from the maximum test force and the original cross-sectional area of the parallel portion. In this case, as long as the strip-shaped small piece (on the flat sheet) can be collected, a collecting position of the small piece is not particularly limited. However, the small piece is preferably collected at a center position of the flat portion where the introduction of strain is as small as possible. Regarding the direction of the strip-shaped small piece, a direction perpendicular to the rolling direction is the longitudinal direction.

Corrosion Resistance

In the hot-stamp formed body according to the present embodiment, the post-coating corrosion resistance is evaluated by a method specified in JASO M609-91 established by the Society of Automotive Engineers of Japan, Inc. Specifically, the evaluation is performed by the following method.

A sample is collected from the hot-stamp formed body, a defect having a length of 70 mm is formed on a flat portion of the sample, to which an electrodeposited coating film is applied with a thickness of 15 $\mu$m, by a cutter, and the sample is provided for a cycle corrosion test. The sample subjected to 120 cycles is taken out, and the coating film is peeled off with a brush after the sample is immersed in a commercially available coating film-peeling agent (for example, "CS-500" manufactured by Neos Company) for 30 min. After that, the sample is immersed in a 10 volume% aqueous solution of ammonium citrate, which contains an inhibitor (for example, "Hibiron YA-9R" manufactured by SUGIMURA Chemical Industrial Co., Ltd.) for a steel sheet, and rust generated on a corroded portion is removed with a brush. The liquid temperature is set to 80°C to 90°C, and the immersion time is set to about 30 to 60 minutes. In a case where rust remains after one time of immersion, the immersion is repeated until the rust is removed. A digital microscope VHX-7000 manufactured by Keyence Corporation is used to measure the maximum value of a reduction in sheet thickness from a reference surface by a length of every 35 mm of the defect with a center portion of the defect, which has a length of 70 mm, as a boundary. The reference surface is defined as the surface of a portion, which is not corroded after the peeling of the coating film regardless of whether or not coating is present. An average value of obtained two maximum values of a reduction in sheet thickness is calculated.

The obtained average value of the maximum values of a reduction in sheet thickness can be evaluated based on the following criteria. In a case where an evaluation is E, it can be determined that the hot-stamp formed body has particularly excellent corrosion resistance.

E (Excellent): less than 0.05 mm
V (Very Good): 0.05 mm or more and less than 0.10 mm
G (Good): 0.10 mm or more and less than 0.15 mm
B (Bad): 0.15 mm or more

[Aluminum-Coated Steel Sheet for Hot Stamping]

Next, an aluminum-coated steel sheet for hot stamping with which the above-described hot-stamp formed body can be produced will be described. An aluminum-coated steel sheet for hot stamping according to the present embodiment contains a steel sheet, an Fe-Al-Si alloy layer provided onto the steel sheet, and an Al-based coating layer provided onto the Fe-Al-Si alloy layer.

Steel Sheet

Since a chemical composition of the steel sheet forming the aluminum-coated steel sheet for hot stamping according to the present embodiment and a measurement method thereof are the same as those of the steel sheet forming the hot-stamp formed body described above, and description thereof will be omitted.

The microstructure of the steel sheet forming the aluminum-coated steel sheet for hot stamping contains, by area%, 20% to 95% of ferrite and 5% to 80% in total of one or two or more of martensite, bainite, pearlite, and cementite.

In the present embodiment, the microstructure at a 1/4 thickness position of the steel sheet forming the aluminum-coated steel sheet for hot stamping (a region between a 1/8 thickness depth from the surface of the steel sheet and a 3/8 thickness depth from the surface) is specified. The reason for that is that the microstructure at this position indicates a typical microstructure of the steel sheet forming the aluminum-coated steel sheet for hot stamping.

Ferrite: 20% to 95%

In a case where the area ratio of the ferrite is less than 20%, a desired microstructure cannot be obtained in the hot-stamp formed body. Therefore, the area ratio of the ferrite is set to 20% or more. The area ratio of the ferrite is preferably 30% or more, 40% or more, 50% or more, or 60% or more.

On the other hand, in a case where the area ratio of the ferrite is more than 95%, a desired microstructure cannot be obtained in the hot-stamp formed body. Therefore, the area ratio of the ferrite is set to 95% or less. The area ratio of the ferrite is preferably 90% or less or 80% or less.

Remainder in Microstructure: 5% to 80% in total

The remainder in microstructure includes one or two or more of martensite, bainite, pearlite, and cementite. The remainder in microstructure is set to 5% to 80% in total in relation to the area ratio of the ferrite. The area ratio of the remainder in microstructure is preferably set to 70% or less, 60% or less, 50% or less, or 40% or less in total. In addition, the area ratio of the remainder in microstructure is preferably set to 10% or more or 20% or more in total.

The area ratio of each structure of the steel sheet forming the aluminum-coated steel sheet for hot stamping is measured in the same method as in a case of the hot-stamp formed body. The Al-based coating layer, the Fe-Al-Si alloy layer, and the steel sheet can be distinguished from one another due to the differences in brightness and morphology in a reflected electron image. In the reflected electron image, a region positioned closest to the thickness center is the steel sheet, and the area ratio of each structure is measured in the steel sheet.

Fe-Al-Si Alloy Layer

The Fe-Al-Si alloy layer is provided between the above-described steel sheet and the Al-based coating layer to be described later. In the Fe-Al-Si alloy layer, a Cu content in the Fe-Al-Si alloy layer satisfies Expression (4).

$$Cu_i \leq 0.40 \times Cu_0 \ldots (4)$$

In Expression (4), $Cu_i$ denotes a Cu concentration in the Fe-Al-Si alloy layer by atom%, and $Cu_0$ denotes a Cu concentration in the steel sheet by atom%.

In the aluminum-coated steel sheet for hot stamping according to the present embodiment, it is important to reduce the Cu content in the Fe-Al-Si alloy layer. FIG. 2 is a schematic diagram showing an example of a cross section of the aluminum-coated steel sheet for hot stamping including the Al-based coating layer, the Fe-Al-Si alloy layer, and the steel sheet. As shown in FIG. 2, in the Al-based coating layer, a needle-shaped Si phase is present in a phase mainly containing Al. In addition, the Fe-Al-Si alloy layer is present between the Al-based coating layer and the steel sheet.

The present inventors have obtained the following findings regarding the Fe-Al-Si alloy layer.

The Fe-Al-Si alloy layer grows by diffusion of Fe from the steel sheet through hot stamping, and becomes an Fe-Al alloy layer in the hot-stamp formed body. In a case where the Cu content in the Fe-Al alloy layer is high and there is no difference between the Cu content in the Fe-Al alloy layer and the Cu content in the diffusion layer, a sacrificial protection effect cannot be sufficiently obtained. As a result, the corrosion resistance of the hot-stamp formed body deteriorates. Therefore, by reducing the Cu content in the Fe-Al-Si alloy layer that is the origin of the Fe-Al alloy layer, the Cu content in the Fe-Al alloy layer in the hot-stamp formed body can be reduced, and the corrosion resistance of the hot-stamp formed body can be increased.

In a case where the Cu concentration ($Cu_i$) in the Fe-Al-Si alloy layer is more than $0.40 \times Cu_0$ ($Cu_0$ is the Cu concentration in the steel sheet by atom%), the above-described effect cannot be obtained, and the corrosion resistance of the hot-stamp formed body deteriorates. Therefore, the Cu concentration ($Cu_i$) in the Fe-Al-Si alloy layer is set to $0.40 \times Cu_0$ (atom%) or less. The Cu concentration ($Cu_i$) in the Fe-Al-Si alloy layer is preferably $0.25 \times Cu_0$ (atom%) or less, $0.15 \times Cu_0$ (atom%) or less, or $0.10 \times Cu_0$ (atom%) or less. The Cu content $Cu_i$ in the Fe-Al-Si alloy layer may be set to 0.015 mass% or less or 0.030 mass% or less.

The lower the Cu content $Cu_i$ in the Fe-Al-Si alloy layer, the more preferable. The lower limit may be set to 0 atom%.

The Fe-Al-Si alloy layer may include, by mass%, Al: 40% to 70%, Fe: 20% to 50%, and Si: 5% to 20% in addition to Cu. The chemical composition of the Fe-Al-Si alloy layer is measured in the same manner as in a case of the diffusion layer of the hot-stamp formed body. Specifically, the measurement is performed by the following method.

First, a reflected electron image is captured in the same manner as in a case of the diffusion layer of the hot-stamp formed body. Next, from the reflected electron image, a region as the steel sheet, which is positioned closest to the thickness center, is determined, a layer provided closest to the surface is regarded as the Al-based coating layer, and a layer provided between the Al-based coating layer and the steel sheet is regarded as the Fe-Al-Si alloy layer. A center portion in the thickness of the layer regarded as the Fe-Al-Si alloy layer from the reflected electron image is subjected to quantitative analysis using EPMA. In the measurement result of the layer regarded as the Fe-Al-Si alloy layer, in a case where the chemical composition includes, by mass%, Al: 40% to 70%, Fe: 20% to 50%, and Si: 5% to 20%, the layer is determined as the Fe-Al-Si alloy layer. In addition, a center portion in the portion regarded as the Al-based coating layer from the reflected electron image is subjected to quantitative analysis of elements in the same manner as described above. In the measurement result, in a case where the chemical composition includes, by mass%, Al: 85.0% to 95.0% and Si: 5.0% to 15.0%, the layer is determined as the Al-based coating layer.

The average thickness of the Fe-Al-Si alloy layer is not particularly limited, and may be set to 2 to 10 $\mu$m. The average thickness of the Fe-Al-Si alloy layer is measured in the same manner as in a case of the diffusion layer of the hot-stamp formed body.

Al-Based Coating Layer

The Al-based coating layer is provided onto the above-described Fe-Al-Si alloy layer. As described above, in the Al-based coating layer, a needle-shaped Si phase is present in a phase mainly containing Al. The chemical composition of the Al-based coating layer as a whole includes, by mass%, Al: 85.0% to 95.0% and Si: 5.0% to 15.0%.

In a case where the Al content in the Al-based coating layer is less than 85.0%, the corrosion resistance (the corrosion resistance of the hot-stamp formed body) after hot stamping deteriorates. Therefore, the Al content is set to 85.0% or more. The Al content is preferably 88.0% or more.

On the other hand, in a case where the Al content in the Al-based coating layer is more than 95.0%, the coating adhesion deteriorates. Therefore, the Al content is set to 95.0% or less. The Al content is preferably 92.0% or less.

In a case where the Si content in the Al-based coating layer is less than 5.0%, the coating adhesion deteriorates. Therefore, the Si content is set to 5.0% or more. The Si content is preferably 7.0% or more.

On the other hand, in a case where the Si content in the Al-based coating layer is more than 15.0%, the coating adhesion deteriorates. Therefore, the Si content is set to 15.0% or less. The Si content is preferably 13.0% or less.

The chemical composition of the Al-based coating layer may include, as elements other than Al and Si, 0.1% to 10.0% of Fe, 0.1% to 45.0% of Zn, and a remainder (Cu, Na, K, Co, Ni, Mg, and the like) of less than 0.5% in total.

The chemical composition of the Al-based coating layer can be measured in the same manner as in a case of the chemical composition of the diffusion layer of the hot-stamp formed body.

The average thickness of the Al-based coating layer is not particularly limited, and may be set to 5 to 50 $\mu$m. The average thickness of the Al-based coating layer is measured in the same manner as in a case of the diffusion layer of the hot-stamp formed body.

Sheet Thickness

The sheet thickness of the aluminum-coated steel sheet for hot stamping according to the present embodiment is not particularly limited, and may be set to 0.5 to 3.5 mm from the viewpoint of reducing the weight of a vehicle body.

Next, a preferable producing method of the aluminum-coated steel sheet for hot stamping according to the present embodiment will be described. The aluminum-coated steel sheet for hot stamping according to the present embodiment can be stably produced by a producing method including the following steps.

A temperature to be described below is the surface temperature of a slab or a steel sheet.

A preferable producing method of the aluminum-coated steel sheet for hot stamping according to the present embodiment includes the following steps.

(I) Rough rolling is performed so that a total interpass time in a temperature range of 1050°C to 1150°C is 120 seconds or shorter.

(II) The steel sheet is immersed in a molten metal bath so that an immersion time t (seconds) in the molten metal bath satisfies Expression (5) and is 8.00 seconds or shorter, whereby a coating is applied on the surface of the steel sheet.

$$0.0554 \times Cu^2 + 0.1549 \times Cu + 0.0187 \le t \le 4 \times 10^6 \times Cu^{4.5779} \dots (5)$$

Cu in Expression (5) is a Cu content in the steel sheet by mass%.

Hereinafter, the steps will be described.

Rough Rolling

In the rough rolling, rough rolling is performed so that a total interpass time in a temperature range of 1050°C to 1150°C is 120 seconds or shorter.

Since Cu contained in the steel sheet is rarely contained in the scale, Cu is concentrated in the vicinity of the surface of the steel sheet in a temperature range of 1050°C to 1150°C during rough rolling. In a case where the coating is applied on the steel sheet in which Cu is concentrated in the vicinity of the surface, the Cu content of the Fe-Al-Si alloy layer of the aluminum-coated steel sheet for hot stamping increases. Therefore, the total interpass time in a temperature range of 1050°C to 1150°C, in which Cu is likely to be concentrated in the vicinity of the surface of the steel sheet, is shortened. The interpass time can be adjusted by controlling the conveyance speed of the steel sheet.

By setting the total interpass time in a temperature range of 1050°C to 1150°C to 120 seconds or shorter, the concentration of Cu in the vicinity of the surface of the steel sheet can be suppressed. As a result, in the aluminum-coated steel sheet for hot stamping after application of the coating on the steel sheet, the Cu content of the Fe-Al-Si alloy layer can be reduced. Therefore, the total interpass time in a temperature range of 1050°C to 1150°C is set to 120 seconds or shorter. The total interpass time is preferably 100 seconds or shorter, 80 seconds or shorter, or 60 seconds or shorter.

In the rough rolling, since the concentration of Cu in the vicinity of the surface of the steel sheet rarely occurs in a temperature range of higher than 1150°C and in a temperature range of lower than 1050°C, it is not necessary to control the interpass time in these temperature ranges.

Conditions for slab heating before rough rolling, finish rolling after rough rolling, cold rolling, and the like are not particularly limited, and may be adjusted according to a common method. That is, for example, the slab heating can be performed in a range of 1100°C to 1350°C, as hot rolling, the above-described finish rolling after rough rolling can be performed in 4 to 8 stages with a total rolling reduction (total rolling reduction) of 70% to 98% in all stages, an entry side temperature of finish rolling of 900°C to 1200°C, and a finish rolling completion temperature of 800°C to 1100°C, and the steel sheet after hot rolling can be subjected to pickling and cold rolling with a rolling reduction of 30% to 85%.

Coating Application

In the coating application to the steel sheet, the steel sheet is immersed in the molten metal bath so that the immersion time t (seconds) in the molten metal bath satisfies Expression (5). In a case where the immersion time t (seconds) in the molten metal bath is longer than the right side of Expression (5), the Cu content in the Fe-Al-Si alloy layer of the aluminum-coated steel sheet for hot stamping increases. In addition, in a case where the immersion time t (seconds) in the molten metal bath is shorter than the left side of Expression (5), the Fe-Al-Si alloy layer is not sufficiently formed, and the adhesion of the Al-based coating layer deteriorates. In addition, in a case where the immersion time t (seconds) in the molten metal bath is longer than 8.00 seconds, the Fe-Al-Si alloy layer grows too much, and powdering of the coating is likely to occur in processing such as blanking.

Annealing may be performed before the coating is applied, and conditions thereof are not particularly limited.

The molten metal bath temperature is not particularly limited, and may be in a temperature range of 620°C to 720°C, for example. The molten metal bath temperature is more preferably set to a temperature range of 650°C to 690°C.

The composition of the molten metal bath is not particularly limited. A Si concentration may be 5 to 15 mass%, an Fe concentration may be 0 to 5 mass%, and a remainder may be Al and impurities of less than 0.5 mass%.

The aluminum-coated steel sheet for hot stamping according to the present embodiment can be stably produced by the producing method described above.

Next, a preferable producing method of the hot-stamp formed body according to the present embodiment using the above-described aluminum-coated steel sheet for hot stamping will be described.

The hot-stamp formed body according to the present embodiment can be produced by performing hot stamping on the above-described aluminum-coated steel sheet for hot stamping.

The hot-stamp formed body is preferably produced by heating the aluminum-coated steel sheet for hot stamping in a temperature range of $Ac_3$ (°C) or higher, rapidly transporting the steel sheet onto a die, and performing hot stamping in a temperature range of $Ar_3$ (°C) or higher. After that, the steel sheet is preferably cooled in the die at an average cooling rate of 30 °C/s or faster via heat transfer between the steel sheet and the die.

$Ac_3$ (°C) can be obtained by the following expression.

$$Ac_3 = \exp(X) + 31.5 \times Mo - 28$$

X = 6.8165 - 0.47132 × C - 0.057321 × Mn + 0.0660261 × Si - 0.050211 × Cr + 0.10593 × Ti + 2.0272 × N + 1.0536 × S - 0.12024 × Si × C + 0.11629 × Cr × C + 0.29225 × $C^2$ + 0.01566 × $Mn^2$ + 0.017315 × $Cr^2$

A symbol of each element in the above-described expression denotes the amount of the element by mass%. In a case where the element is not contained, 0 is substituted to the symbol of the element.

In addition, $Ar_3$ (°C) can be obtained by the following expression. A symbol of each element in the expression denotes the amount of each element by mass%. In a case where the element is not contained, 0 is substituted to the symbol of the element.

$$Ar_3 = 901 - 325 \times C + 33 \times Si - 92 \times (Mn + Mo + 1.45 \times Ni) + 287 \times P + 40 \times Al$$

Since the steel sheet is heated in a temperature range of $Ac_3$ (°C) or higher, a microstructure of the steel sheet can be sufficiently austenitized. In a case where the microstructure is sufficiently austenitized, a desired amount of martensite can be obtained by cooling to be described later. Therefore, the heating temperature before hot stamping is preferably set in a temperature range of $Ac_3$ (°C) or higher.

A retention time in a temperature range of $Ac_3$ (°C) or higher may be set to 0.1 (6 seconds) to 30.0 minutes. The conditions for obtaining a desired amount of martensite in the microstructure of the steel sheet of the hot-stamp formed body may be as described above, but it is also necessary to confirm conditions under which the diffusion layer sufficiently grows. Since the growth of the diffusion layer depends on the heating temperature, the hot stamping may be performed under conditions in which the heating time is changed after determination of the heating temperature, and the thickness of the diffusion layer may be confirmed to set the heating time condition.

In a case where the hot stamping is performed in a temperature range of $Ar_3$ (°C) or higher, the steel sheet can be cooled before the start of ferritic transformation, pearlitic transformation, and bainitic transformation. As a result, martensitic transformation can be caused to occur. Therefore, the hot stamping start temperature (forming start temperature) is preferably set in a temperature range of $Ar_3$ (°C) or higher.

Since the steel sheet is cooled at an average cooling rate of 30 °C/s or faster after hot stamping, a desired amount of martensite can be obtained. Therefore, the steel sheet is preferably cooled at an average cooling rate of 30 °C/s or faster after hot stamping.

The hot-stamp formed body according to the present embodiment can be stably produced by the producing method described above.

Examples

Next, examples of the present invention will be described. Conditions in the examples are one example of conditions adopted to confirm the feasibility and effects of the present invention, and the present invention is not limited to this example of conditions. The present invention may adopt various conditions as long as the object of the present invention is achieved without departing from the gist of the present invention.

Aluminum-coated steel sheets for hot stamping shown in Tables 4A to 4C were obtained under conditions shown in Tables 3A to 3C using slabs having chemical compositions shown in Tables 1A to 2C. The obtained aluminum-coated steel sheets for hot stamping had a sheet thickness of 0.5 to 3.5 mm. The heating temperature of the slab, the total rolling reduction of finish rolling, the number of stages, the entry side temperature, the completion temperature, and the cold rolling ratio are shown in Tables 3A to 3C.

The molten metal bath temperature was set to 620°C to 720°C, and in the composition of a molten metal bath, a Si concentration: 5 to 15 mass%, an Fe concentration: 0 to 5 mass%, and a remainder: Al and impurities of less than 0.5 mass% were set.

Regarding the obtained aluminum-coated steel sheets for hot stamping, the microstructure of the steel sheet, chemical composition analysis and average thickness measurement for the Fe-Al-Si alloy layer, and chemical composition analysis and average thickness measurement for the Al-based coating layer were performed by the above-described methods.

In the present invention examples, the Fe-Al-Si alloy layer included, as a chemical composition, Al: 40% to 70%, Fe: 20% to 50%, and Si: 5% to 20% other than Cu, and the average thickness thereof was 2 to 10 $\mu$m. In addition, the Al-based coating layer had an average thickness of 5 to 50 $\mu$m.

In Manufacture No. 78, in the aluminum-coated steel sheet for hot stamping, the coating adhesion was insufficient, and a desired Fe-Al-Si alloy layer was not formed. For the evaluation of the coating adhesion, close contact bending was performed according to a press bending method described in JIS Z 2248 (2014) to visually confirm whether the coating was peeled off at a bent portion. In Manufacture No. 78, since the coating was peeled off, the coating adhesion was determined to be insufficient.

Next, hot stamping was performed under conditions shown in Tables 5A to 5C using the aluminum-coated steel sheets for hot stamping. The hot stamping was performed by sandwiching a flat sheet-shaped aluminum-coated steel sheet for hot stamping with a water cooling die and pressurizing it for 10 seconds with a contact pressure of 20 MPa so that test pieces for performing a tensile test and microstructure observation were easily prepared. Specifically, the aluminum-coated steel sheet for hot stamping was heated in a temperature range of Ac$_3$ (°C) or higher, rapidly transported onto a water cooling die to be sandwiched in a temperature range of Ar$_3$ (°C) or higher, and cooled at an average cooling rate of 30 °C/s or faster in the water cooling die. Accordingly, hot-stamping formed bodies shown in Tables 6A to 6C were obtained. The obtained hot-stamping formed bodies had a sheet thickness of 0.5 to 3.5 mm. Here, the water cooling die refers to a die having a water channel therein, in which cooling water is passed through the water channel to suppress an increase in temperature of the die.

In the tables, the value of "others" in the diffusion layer includes the Cu concentration (mass%) in the diffusion layer.

Manufacture Nos. 68 to 71 were subjected to hot stamping under the following conditions.

Manufacture No. 68: The aluminum-coated steel sheet for hot stamping was heated to 870°C, retained for 5 seconds, rapidly transported onto a water cooling die to be sandwiched at 780°C, and cooled in the water cooling die at an average cooling rate of 30 °C/s or faster. In this example, a desired amount of martensite was obtained in the microstructure of the steel sheet of the hot-stamp formed body, but the retention time in a temperature range of Ac$_3$ or higher was short, so that it was not possible to sufficiently generate the diffusion layer.

Manufacture No. 69: The aluminum-coated steel sheet for hot stamping was heated to 950°C, retained for 300 seconds, rapidly transported onto a water cooling die to be sandwiched at 780°C, and cooled in the water cooling die at an average cooling rate of 30 °C/s or faster. In this example, a desired amount of martensite was obtained in the microstructure of the steel sheet of the hot-stamp formed body, but the heating temperature and the retention time were inappropriate in order to generate a diffusion layer having a desired thickness.

Manufacture No. 70: The aluminum-coated steel sheet for hot stamping was heated to 750°C, retained for 20 seconds, rapidly transported onto a water cooling die to be sandwiched at 600°C, and cooled in the water cooling die at an average cooling rate of 30 °C/s or faster. In this example, the heating temperature and the temperature at which the hot stamping was performed were low. In this example, since the diffusion layer was not formed, it was not possible to analyze the diffusion layer.

Manufacture No. 71: The aluminum-coated steel sheet for hot stamping was heated to 950°C, retained for 70 seconds, pressed by a normal die with a clamp press at a press speed of 20 spm, and then air-cooled to room temperature. The average cooling rate at this time was slower than 30 °C/s.

Manufacture No. 82: The aluminum-coated steel sheet for hot stamping was heated to 900°C, retained for 32 minutes, rapidly transported onto a water cooling die to be sandwiched at 780°C, and cooled in the water cooling die at an average cooling rate of 30 °C/s or faster. In this example, the diffusion layer was too thick. Therefore, a corrosion potential difference rarely occurred between the Fe-Al phase in the Fe-Al alloy layer and the diffusion layer, and a sacrificial protection effect was not sufficiently exhibited. As a result, the corrosion resistance of the hot-stamp formed body deteriorated.

Regarding the obtained hot-stamp formed bodies, observation of the microstructure of the steel sheet, chemical composition analysis and average thickness measurement for the diffusion layer, and chemical composition analysis and average thickness measurement for the Fe-Al alloy layer were performed by the above-described methods. In addition, a tensile test and corrosion resistance evaluation were performed by the above-described methods.

In the present invention examples, the Fe-Al alloy layer included an Fe-Al phase containing 40 to 60 mass% of Fe and 40 to 60 mass% of Al and a $\tau_1$ phase containing 50 to 77 mass% of Fe, 20 to 40 mass% of Al, and 3 to 10 mass% of Si. In addition, the Fe-Al alloy layer had an average thickness of 5 to 60 $\mu$m, and included, as a chemical composition, Fe: 25 to 80 mass%, Al; 20 to 60 mass%, Si: 0 to 10 mass%, and a remainder: less than 5 mass%. In addition, the Al-based coating layer had an average thickness of 5 to 50 $\mu$m.

The tensile strength was evaluated based on the following criteria according to the C content of the steel sheet.

C Content of 0.050 mass% or more and less than 0.100%: 900 MPa or more

C Content of 0.100 mass% or more and less than 0.200%: 1100 MPa or more

C content of 0.200 mass% or more and 0.250% or less: 1350 MPa or more

In a case where the above criteria were satisfied, the hot-stamp formed body was determined to be acceptable as it had a high strength. On the other hand, in a case where the above criteria were not satisfied, the hot-stamp formed body was determined to be unacceptable as it had no high strength.

In the corrosion resistance evaluation, an average value of obtained maximum values of a reduction in sheet thickness was evaluated based on the following criteria. In a case where an evaluation is E, it was determined that the hot-stamp formed body had particularly excellent corrosion resistance.

E (Excellent): less than 0.05 mm

V (Very Good): 0.05 mm or more and less than 0.10 mm

G (Good): 0.10 mm or more and less than 0.15 mm

B (Bad): 0.15 mm or more

[Table 1A]

| Steel No. | Chemical Composition (mass%) Remainder being Fe and Impurities | | | | | | | | | | | |
|---|---|---|---|---|---|---|---|---|---|---|---|---|
| | C | Si | Mn | P | S | Al | N | O | Ti | B | Cu | As |
| 1 | 0.053 | 0.438 | 1.93 | 0.010 | 0.0021 | 0.031 | 0.0049 | 0.0028 | 0.042 | 0.0019 | 0.123 | 0.0081 |
| 2 | 0.248 | 0.193 | 1.28 | 0.009 | 0.0009 | 0.045 | 0.0046 | 0.0012 | 0.039 | 0.0028 | 0.087 | 0.0132 |
| 3 | 0.201 | 0.011 | 1.42 | 0.013 | 0.0023 | 0.035 | 0.0049 | 0.0015 | 0.033 | 0.0025 | 0.132 | 0.0232 |
| 4 | 0.219 | 1.230 | 1.23 | 0.008 | 0.0019 | 0.039 | 0.0044 | 0.0008 | 0.031 | 0.0021 | 0.092 | 0.0234 |
| 5 | 0.182 | 1.930 | 1.30 | 0.008 | 0.0019 | 0.042 | 0.0053 | 0.0019 | 0.044 | 0.0029 | 0.112 | 0.0132 |
| 6 | 0.233 | 0.113 | 0.81 | 0.013 | 0.0023 | 0.029 | 0.0038 | 0.0021 | 0.033 | 0.0019 | 0.075 | 0.0093 |
| 7 | 0.192 | 0.231 | 2.98 | 0.007 | 0.0003 | 0.033 | 0.0049 | 0.0019 | 0.035 | 0.0020 | 0.143 | 0.0312 |
| 8 | 0.239 | 0.192 | 1.54 | 0.028 | 0.0007 | 0.032 | 0.0053 | 0.0021 | 0.041 | 0.0028 | 0.211 | 0.0194 |
| 9 | 0.211 | 0.321 | 1.19 | 0.093 | 0.0003 | 0.033 | 0.0049 | 0.0080 | 0.039 | 0.0021 | 0.081 | 0.0193 |
| 10 | 0.209 | 0.132 | 1.32 | 0.009 | 0.0093 | 0.021 | 0.0039 | 0.0011 | 0.028 | 0.0019 | 0.071 | 0.0083 |
| 11 | 0.245 | 0.332 | 1.13 | 0.011 | 0.0023 | 0.003 | 0.0063 | 0.0810 | 0.039 | 0.0025 | 0.167 | 0.0093 |
| 12 | 0.203 | 0.231 | 1.20 | 0.008 | 0.0032 | 0.489 | 0.0054 | 0.0003 | 0.043 | 0.0019 | 0.231 | 0.0159 |
| 13 | 0.213 | 0.487 | 1.13 | 0.007 | 0.0022 | 0.034 | 0.0098 | 0.0019 | 0.082 | 0.0025 | 0.082 | 0.0099 |
| 14 | 0.241 | 0.266 | 1.57 | 0.007 | 0.0021 | 0.035 | 0.0148 | 0.0009 | 0.032 | 0.0019 | 0.130 | 0.0329 |
| 15 | 0.203 | 0.230 | 1.23 | 0.012 | 0.0019 | 0.008 | 0.0055 | 0.0980 | 0.052 | 0.0035 | 0.190 | 0.0133 |
| 16 | 0.211 | 0.049 | 1.43 | 0.008 | 0.0008 | 0.026 | 0.0032 | 0.0013 | 0.005 | 0.0049 | 0.230 | 0.0091 |
| 17 | 0.235 | 0.321 | 1.29 | 0.011 | 0.0032 | 0.035 | 0.0073 | 0.0019 | 0.098 | 0.0019 | 0.182 | 0.0133 |
| 18 | 0.249 | 0.252 | 1.33 | 0.009 | 0.0012 | 0.083 | 0.0028 | 0.0008 | 0.078 | 0.0006 | 0.091 | 0.0084 |
| 19 | 0.209 | 0.133 | 1.42 | 0.023 | 0.0039 | 0.041 | 0.0039 | 0.0011 | 0.093 | 0.0049 | 0.132 | 0.0071 |
| 20 | 0.213 | 0.241 | 1.31 | 0.009 | 0.0021 | 0.033 | 0.0049 | 0.0013 | 0.034 | 0.0021 | 0.051 | 0.0081 |
| 21 | 0.214 | 0.233 | 1.33 | 0.010 | 0.0024 | 0.035 | 0.0045 | 0.0008 | 0.032 | 0.0023 | 0.054 | 0.0132 |
| 22 | 0.211 | 0.232 | 1.30 | 0.008 | 0.0019 | 0.034 | 0.0044 | 0.0009 | 0.033 | 0.0022 | 0.056 | 0.0189 |
| 23 | 0.213 | 0.231 | 1.31 | 0.010 | 0.0023 | 0.033 | 0.0059 | 0.0008 | 0.034 | 0.0024 | 0.073 | 0.0239 |
| 24 | 0.212 | 0.233 | 1.30 | 0.011 | 0.0022 | 0.035 | 0.0061 | 0.0008 | 0.031 | 0.0022 | 0.132 | 0.0239 |
| 25 | 0.210 | 0.231 | 1.30 | 0.010 | 0.0021 | 0.034 | 0.0063 | 0.0009 | 0.035 | 0.0023 | 0.236 | 0.0239 |
| 26 | 0.213 | 0.231 | 1.32 | 0.009 | 0.0023 | 0.033 | 0.0059 | 0.0011 | 0.034 | 0.0021 | 0.872 | 0.0239 |
| 27 | 0.213 | 0.233 | 1.31 | 0.010 | 0.0022 | 0.032 | 0.0041 | 0.0009 | 0.032 | 0.0024 | 1.320 | 0.0539 |

(continued)

| Steel No. | Chemical Composition (mass%) Remainder being Fe and Impurities | | | | | | | | | | | |
|---|---|---|---|---|---|---|---|---|---|---|---|---|
| | C | Si | Mn | P | S | Al | N | O | Ti | B | Cu | As |
| 28 | 0.216 | 0.245 | 1.32 | 0.010 | 0.0022 | 0.031 | 0.0047 | 0.0011 | 0.035 | 0.0021 | 2.930 | 0.0832 |

[Table 1B]

| Steel No. | Chemical Composition (mass%) Remainder being Fe and Impurities | | | | | | | | | | | |
|---|---|---|---|---|---|---|---|---|---|---|---|---|
| | C | Si | Mn | P | S | Al | N | O | Ti | B | Cu | As |
| 29 | 0.051 | 0.233 | 1.25 | 0.009 | 0.0020 | 0.032 | 0.0048 | 0.0013 | 0.034 | 0.0022 | 0.051 | 0.0078 |
| 30 | 0.214 | 0.230 | 1.38 | 0.010 | 0.0023 | 0.036 | 0.0044 | 0.0008 | 0.033 | 0.0023 | 0.076 | 0.0130 |
| 31 | 0.211 | 0.236 | 1.34 | 0.008 | 0.0020 | 0.033 | 0.0044 | 0.0009 | 0.034 | 0.0021 | 0.154 | 0.0182 |
| 32 | 0.213 | 0.221 | 1.37 | 0.010 | 0.0023 | 0.033 | 0.0058 | 0.0009 | 0.034 | 0.0023 | 0.327 | 0.0242 |
| 33 | 0.213 | 0.233 | 1.26 | 0.010 | 0.0023 | 0.032 | 0.0061 | 0.0009 | 0.035 | 0.0024 | 1.261 | 0.0557 |
| 34 | 0.216 | 0.234 | 1.32 | 0.010 | 0.0021 | 0.032 | 0.0046 | 0.0011 | 0.033 | 0.0022 | 2.950 | 0.0800 |
| 35 | 0.218 | 0.233 | 1.31 | 0.009 | 0.0023 | 0.037 | 0.0052 | 0.0008 | 0.035 | 0.0024 | 0.057 | 0.0006 |
| 36 | 0.221 | 0.234 | 1.32 | 0.011 | 0.0031 | 0.035 | 0.0055 | 0.0009 | 0.041 | 0.0022 | 0.093 | 0.0015 |
| 37 | 0.218 | 0.211 | 1.29 | 0.011 | 0.0033 | 0.039 | 0.0049 | 0.0011 | 0.033 | 0.0021 | 0.082 | 0.0025 |
| 38 | 0.210 | 0.242 | 1.33 | 0.008 | 0.0031 | 0.035 | 0.0048 | 0.0017 | 0.041 | 0.0022 | 0.092 | 0.5320 |
| 39 | 0.212 | 0.232 | 1.28 | 0.012 | 0.0023 | 0.037 | 0.0061 | 0.0008 | 0.033 | 0.0024 | 0.232 | 0.9320 |
| 40 | 0.242 | 0.391 | 1.55 | 0.008 | 0.0007 | 0.041 | 0.0049 | 0.0009 | 0.033 | 0.0031 | 0.132 | 0.0132 |
| 41 | 0.239 | 0.090 | 0.93 | 0.007 | 0.0011 | 0.029 | 0.0051 | 0.0011 | 0.048 | 0.0023 | 0.232 | 0.0243 |
| 42 | 0.244 | 0.081 | 0.88 | 0.008 | 0.0007 | 0.035 | 0.0049 | 0.0007 | 0.032 | 0.0025 | 0.192 | 0.0193 |
| 43 | 0.242 | 0.031 | 1.25 | 0.011 | 0.0008 | 0.041 | 0.0042 | 0.0019 | 0.032 | 0.0021 | 0.188 | 0.0132 |
| 44 | 0.211 | 0.150 | 1.12 | 0.010 | 0.0022 | 0.044 | 0.0043 | 0.0019 | 0.036 | 0.0018 | 0.081 | 0.0083 |
| 45 | 0.223 | 0.132 | 1.31 | 0.009 | 0.0011 | 0.039 | 0.0044 | 0.0019 | 0.039 | 0.0023 | 0.113 | 0.0132 |
| 46 | 0.219 | 0.211 | 1.36 | 0.009 | 0.0023 | 0.043 | 0.0049 | 0.0021 | 0.039 | 0.0021 | 0.321 | 0.0083 |
| 47 | 0.239 | 0.030 | 1.81 | 0.011 | 0.0009 | 0.033 | 0.0049 | 0.0019 | 0.033 | 0.0024 | 0.132 | 0.0323 |
| 48 | 0.233 | 0.192 | 1.32 | 0.009 | 0.0011 | 0.039 | 0.0041 | 0.0011 | 0.029 | 0.0017 | 0.082 | 0.0091 |
| 49 | 0.221 | 0.232 | 1.23 | 0.011 | 0.0032 | 0.035 | 0.0038 | 0.0013 | 0.033 | 0.0025 | 0.091 | 0.0072 |
| 50 | 0.203 | 0.192 | 1.33 | 0.009 | 0.0023 | 0.039 | 0.0052 | 0.0019 | 0.039 | 0.0021 | 0.087 | 0.0132 |
| 51 | 0.193 | 0.112 | 2.04 | 0.009 | 0.0009 | 0.034 | 0.0048 | 0.0017 | 0.031 | 0.0019 | 0.231 | 0.2310 |
| 52 | 0.081 | 0.312 | 1.63 | 0.005 | 0.0033 | 0.033 | 0.0041 | 0.0009 | 0.032 | 0.0025 | 0.081 | 0.0082 |
| 53 | 0.115 | 0.441 | 1.41 | 0.011 | 0.0093 | 0.049 | 0.0049 | 0.0018 | 0.031 | 0.0016 | 0.192 | 0.1340 |
| 54 | 0.157 | 0.123 | 2.13 | 0.009 | 0.0004 | 0.039 | 0.0044 | 0.0008 | 0.049 | 0.0023 | 0.082 | 0.0033 |
| 55 | 0.145 | 0.234 | 1.52 | 0.011 | 0.0023 | 0.049 | 0.0039 | 0.0018 | 0.035 | 0.0027 | 0.192 | 0.0112 |

[Table 1C]

| Steel No. | Chemical Composition (mass%) Remainder being Fe and Impurities | | | | | | | | | | | |
|---|---|---|---|---|---|---|---|---|---|---|---|---|
| | C | Si | Mn | P | S | Al | N | O | Ti | B | Cu | As |
| 56 | 0.045 | 0.433 | 1.13 | 0.009 | 0.0021 | 0.036 | 0.0044 | 0.0019 | 0.044 | 0.0021 | 0.132 | 0.0091 |
| 57 | 0.233 | 0.113 | 0.70 | 0.012 | 0.0031 | 0.033 | 0.0041 | 0.0019 | 0.036 | 0.0025 | 0.081 | 0.0093 |
| 58 | 0.153 | 0.032 | 0.63 | 0.013 | 0.0034 | 0.035 | 0.0049 | 0.0023 | 0.036 | 0.0024 | 0.082 | 0.0950 |

(continued)

| Steel No. | Chemical Composition (mass%) Remainder being Fe and Impurities | | | | | | | | | | | |
|---|---|---|---|---|---|---|---|---|---|---|---|---|
| | C | Si | Mn | P | S | Al | N | O | Ti | B | Cu | As |
| <u>59</u> | 0.076 | 0.044 | <u>0.61</u> | 0.011 | 0.0022 | 0.041 | 0.0052 | 0.0033 | 0.045 | 0.0023 | 0.081 | 0.0090 |
| <u>60</u> | 0.210 | 0.050 | 1.44 | 0.009 | 0.0008 | 0.029 | 0.0034 | 0.0008 | <u>0.004</u> | 0.0023 | 0.220 | 0.0092 |
| <u>61</u> | 0.248 | 0.251 | 1.32 | 0.010 | 0.0012 | 0.034 | 0.0039 | 0.0011 | 0.035 | <u>0.0004</u> | 0.093 | 0.0082 |
| <u>62</u> | 0.212 | 0.243 | 1.33 | 0.011 | 0.0023 | 0.035 | 0.0043 | 0.0013 | 0.032 | 0.0023 | <u>0.031</u> | 0.0034 |
| <u>63</u> | 0.211 | 0.244 | 1.32 | 0.009 | 0.0019 | 0.034 | 0.0051 | 0.0019 | 0.034 | 0.0024 | <u>0.012</u> | 0.0039 |
| <u>64</u> | 0.078 | 0.322 | 1.65 | 0.010 | 0.0019 | 0.033 | 0.0049 | 0.0012 | 0.033 | 0.0023 | <u>0.019</u> | 0.0033 |
| 65 | 0.221 | 0.232 | 1.23 | 0.011 | 0.0032 | 0.035 | 0.0038 | 0.0013 | 0.033 | 0.0025 | 0.091 | 0.0072 |
| 66 | 0.221 | 0.232 | 1.23 | 0.011 | 0.0032 | 0.035 | 0.0038 | 0.0013 | 0.033 | 0.0025 | 0.091 | 0.0072 |
| 67 | 0.081 | 0.312 | 1.63 | 0.005 | 0.0033 | 0.033 | 0.0041 | 0.0009 | 0.032 | 0.0025 | 0.081 | 0.0082 |
| 68 | 0.203 | 0.192 | 1.33 | 0.009 | 0.0023 | 0.039 | 0.0052 | 0.0019 | 0.039 | 0.0021 | 0.087 | 0.0132 |
| 69 | 0.203 | 0.192 | 1.33 | 0.009 | 0.0023 | 0.039 | 0.0052 | 0.0019 | 0.039 | 0.0021 | 0.087 | 0.0132 |
| 70 | 0.203 | 0.192 | 1.33 | 0.009 | 0.0023 | 0.039 | 0.0052 | 0.0019 | 0.039 | 0.0021 | 0.087 | 0.0132 |
| 71 | 0.203 | 0.192 | 1.33 | 0.009 | 0.0023 | 0.039 | 0.0052 | 0.0019 | 0.039 | 0.0021 | 0.087 | 0.0132 |
| 72 | 0.222 | 0.234 | 1.73 | 0.010 | 0.0028 | 0.031 | 0.0041 | 0.0009 | 0.028 | 0.0024 | 0.095 | 0.0081 |
| 73 | 0.083 | 0.313 | 1.75 | 0.004 | 0.0032 | 0.035 | 0.0048 | 0.0010 | 0.033 | 0.0022 | 0.083 | 0.0083 |
| 74 | 0.210 | 0.234 | 1.29 | 0.009 | 0.0019 | 0.033 | 0.0045 | 0.0008 | 0.032 | 0.0022 | 0.0568 | 0.0188 |
| Each underline indicates that the underlined number is outside the range of the present invention. | | | | | | | | | | | | |

[Table 2A]

| Steel No. | Chemical Composition (mass%) Remainder being Fe and Impurities | | | | | | | | | | | | | | Ac$_3$ °C | Ar$_3$ °C | Remarks |
|---|---|---|---|---|---|---|---|---|---|---|---|---|---|---|---|---|---|
| | Cr | Mo | Ni | Co | W | Sn | Nb | V | Zr | Ca | Mg | REM | Sb | Pb | | | |
| 1 | 0.030 | 0.030 | 0.032 | 0.0003 | 0.0002 | 0.0240 | 0.0003 | 0.008 | 0.001 | | | | 0.0003 | 0.0003 | 854 | 718 | Present Invention Example |
| 2 | 0.210 | 0.040 | 0.078 | 0.0002 | 0.0004 | 0.0430 | 0.0002 | 0.006 | 0.001 | | | | 0.0008 | 0.0002 | 776 | 699 | Present Invention Example |
| 3 | 0.193 | 0.039 | 0.069 | 0.0003 | 0.0005 | 0.0390 | 0.0380 | 0.004 | 0.002 | 0.0010 | 0.0010 | | 0.0002 | 0.0009 | 782 | 698 | Present Invention Example |
| 4 | 0.182 | 0.046 | 0.052 | 0.0002 | 0.0004 | 0.0440 | 0.0390 | 0.003 | 0.001 | 0.0009 | 0.0002 | 0.0001 | 0.0003 | 0.0005 | 819 | 750 | Present Invention Example |
| 5 | 0.820 | 0.043 | 0.049 | 0.0004 | 0.0003 | 0.0320 | 0.0010 | 0.005 | 0.001 | | | | 0.0003 | 0.0011 | 856 | 779 | Present Invention Example |
| 6 | 0.130 | 0.240 | 0.055 | 0.0003 | 0.0002 | 0.0030 | 0.0090 | 0.004 | 0.002 | 0.0010 | 0.0030 | | 0.0005 | 0.0008 | 793 | 730 | Present Invention Example |
| 7 | 0.032 | 0.033 | 0.028 | 0.0003 | 0.0003 | 0.0190 | 0.0001 | 0.004 | 0.002 | 0.0020 | 0.0010 | 0.0010 | 0.0003 | 0.0011 | 809 | 569 | Present Invention Example |
| 8 | 0.182 | 0.061 | 0.078 | 0.0005 | 0.0001 | 0.0430 | 0.0021 | 0.005 | 0.001 | | | | 0.0012 | 0.0019 | 777 | 681 | Present Invention Example |
| 9 | 0.231 | 0.048 | 0.042 | 0.0003 | 0.0002 | 0.0390 | 0.0012 | 0.004 | 0.002 | 0.0001 | 0.0002 | 0.0001 | 0.0003 | 0.0013 | 791 | 752 | Present Invention Example |
| 10 | 0.192 | 0.042 | 0.033 | 0.0002 | 0.0003 | 0.0490 | 0.0013 | 0.003 | 0.002 | | 0.0001 | 0.0002 | 0.0007 | 0.0007 | 789 | 711 | Present Invention Example |

EP 4 667 600 A1

(continued)

| Steel No. | Chemical Composition (mass%) Remainder being Fe and Impurities | | | | | | | | | | | | | | $Ac_3$ °C | $Ar_3$ °C | Remarks |
|---|---|---|---|---|---|---|---|---|---|---|---|---|---|---|---|---|---|
| | Cr | Mo | Ni | Co | W | Sn | Nb | V | Zr | Ca | Mg | REM | Sb | Pb | | | |
| 11 | 0.221 | 0.047 | 0.071 | 0.0001 | | 0.0530 | 0.0003 | 0.001 | 0.003 | 0.0001 | 0.0001 | | 0.0060 | 0.0011 | 787 | 718 | Present Invention Example |
| 12 | 0.182 | 0.058 | 0.132 | 0.0003 | 0.0005 | 0.0810 | 0.0005 | 0.002 | 0.003 | 0.0001 | 0.0030 | 0.0010 | 0.0050 | 0.0023 | 795 | 731 | Present Invention Example |
| 13 | 0.149 | 0.042 | 0.043 | 0.0002 | 0.0012 | 0.0460 | 0.0003 | 0.003 | 0.002 | 0.0023 | 0.0003 | 0.0010 | 0.0003 | 0.0009 | 812 | 738 | Present Invention Example |
| 14 | 0.043 | 0.032 | 0.043 | 0.0001 | 0.0420 | 0.0490 | 0.0003 | 0.001 | 0.001 | 0.0003 | 0.0001 | 0.0032 | | 0.0018 | 796 | 682 | Present Invention Example |
| 15 | 0.189 | 0.077 | 0.056 | 0.0003 | 0.0010 | 0.0730 | 0.0020 | 0.001 | 0.003 | | | 0.0005 | 0.0005 | 0.0033 | 795 | 719 | Present Invention Example |
| 16 | 0.235 | 0.048 | 0.051 | 0.0002 | 0.0002 | 0.0490 | 0.0030 | 0.002 | 0.001 | 0.0001 | 0.0011 | | 0.0003 | 0.0011 | 774 | 695 | Present Invention Example |
| 17 | 0.201 | 0.042 | 0.061 | 0.0001 | 0.0005 | 0.0330 | 0.0012 | 0.001 | | | | | 0.0012 | 0.0009 | 795 | 709 | Present Invention Example |
| 18 | 0.241 | 0.037 | 0.032 | | 0.0003 | 0.0420 | 0.0001 | 0.001 | | | | 0.0001 | 0.0003 | 0.0008 | 777 | 704 | Present Invention Example |
| 19 | 0.183 | 0.049 | 0.062 | 0.0910 | | 0.0330 | 0.0002 | 0.001 | | 0.0015 | | 0.0001 | 0.0005 | 0.0005 | 789 | 702 | Present Invention Example |
| 20 | 0.231 | 0.031 | 0.041 | 0.2410 | 0.0010 | 0.0290 | | 0.001 | 0.0001 | 0.0001 | | 0.0001 | 0.0003 | 0.0009 | 787 | 715 | Present Invention Example |

24

(continued)

| Steel No. | Chemical Composition (mass%) Remainder being Fe and Impurities | | | | | | | | | | | | | | Ac$_3$ °C | Ar$_3$ °C | Remarks |
|---|---|---|---|---|---|---|---|---|---|---|---|---|---|---|---|---|---|
| | Cr | Mo | Ni | Co | W | Sn | Nb | V | Zr | Ca | Mg | REM | Sb | Pb | | | |
| 21 | 0.223 | 0.043 | 0.053 | 0.0001 | 0.0010 | 0.0420 | | 0.001 | 0.0001 | 0.0001 | | 0.0001 | 0.0003 | 0.0011 | 786 | 710 | Present Invention Example |
| 22 | 0.235 | 0.072 | 0.132 | 0.0002 | 0.0010 | 0.0560 | | 0.001 | 0.0001 | 0.0001 | | | 0.0190 | 0.0008 | 787 | 700 | Present Invention Example |
| 23 | 0.229 | 0.083 | 0.192 | 0.0002 | 0.0010 | 0.0730 | | 0.001 | 0.0001 | 0.0001 | | | 0.0006 | 0.0009 | 790 | 690 | Present Invention Example |
| 24 | 0.221 | 0.081 | 0.193 | 0.0002 | 0.0010 | 0.0660 | | 0.001 | 0.0001 | 0.0001 | | | 0.0006 | 0.0009 | 790 | 692 | Present Invention Example |
| 25 | 0.223 | 0.092 | 0.201 | 0.0002 | 0.0010 | 0.0810 | | 0.001 | 0.0001 | 0.0001 | | | 0.0006 | 0.0009 | 792 | 690 | Present Invention Example |
| 26 | 0.223 | 0.085 | 0.193 | 0.0002 | 0.0010 | 0.0840 | | 0.001 | 0.0001 | 0.0001 | | | 0.0006 | 0.0009 | 790 | 688 | Present Invention Example |
| 27 | 0.224 | 0.120 | 0.231 | 0.0003 | 0.0010 | 0.1320 | 0.0020 | 0.001 | 0.0001 | 0.0001 | | | 0.0004 | 0.0012 | 788 | 681 | Present Invention Example |
| 28 | 0.235 | 0.230 | 0.242 | 0.0002 | 0.0010 | 0.2310 | 0.0001 | 0.001 | 0.0001 | 0.0001 | | 0.0001 | 0.0023 | 0.0011 | 792 | 668 | Present Invention Example |

[Table 2B]

| Steel No. | Chemical Composition (mass%) Remainder being Fe and Impurities | | | | | | | | | | | | | | Ac₃ °C | Ar₃ °C | Remarks |
|---|---|---|---|---|---|---|---|---|---|---|---|---|---|---|---|---|---|
| | Cr | Mo | Ni | Co | W | Sn | Nb | V | Zr | Ca | Mg | REM | Sb | Pb | | | |
| 29 | 0.224 | 0.031 | 0.042 | 0.0001 | 0.0010 | 0.0286 | 0.0320 | 0.001 | 0.0001 | 0.0001 | | 0.0001 | 0.0003 | 0.0009 | 841 | 773 | Present Invention Example |
| 30 | 0.234 | 0.043 | 0.052 | 0.0002 | 0.0010 | 0.0416 | 0.0420 | 0.001 | 0.0001 | 0.0001 | | 0.0001 | 0.0003 | 0.0011 | 785 | 706 | Present Invention Example |
| 31 | 0.224 | 0.074 | 0.137 | 0.0003 | 0.0310 | 0.0576 | 0.0530 | 0.001 | 0.0001 | 0.0001 | | | 0.0185 | 0.0008 | 787 | 695 | Present Invention Example |
| 32 | 0.236 | 0.087 | 0.195 | 0.0003 | 0.0010 | 0.0740 | 0.0520 | 0.001 | 0.0001 | 0.0001 | | | 0.0006 | 0.0009 | 789 | 683 | Present Invention Example |
| 33 | 0.218 | 0.115 | 0.239 | 0.0003 | 0.0010 | 0.1268 | 0.0430 | 0.001 | 0.0001 | 0.0001 | | | 0.0004 | 0.0012 | 792 | 685 | Present Invention Example |
| 34 | 0.242 | 0.228 | 0.233 | 0.0002 | 0.0010 | 0.2307 | 0.0230 | 0.001 | 0.0001 | 0.0001 | | 0.0001 | 0.0023 | 0.0011 | 791 | 669 | Present Invention Example |
| 35 | 0.210 | 0.040 | 0.013 | 0.0002 | 0.0001 | 0.0190 | 0.0001 | 0.002 | | | | | 0.0002 | 0.0002 | 786 | 716 | Present Invention Example |
| 36 | 0.209 | 0.036 | 0.034 | 0.0002 | 0.0001 | 0.0330 | 0.0001 | 0.002 | | | | | 0.0002 | 0.0007 | 787 | 712 | Present Invention Example |
| 37 | 0.210 | 0.040 | 0.013 | 0.0002 | 0.0001 | 0.0190 | 0.0001 | 0.002 | | | | | 0.0002 | 0.0002 | 786 | 718 | Present Invention Example |
| 38 | 0.230 | 0.031 | 0.022 | 0.0002 | 0.0001 | 0.0360 | 0.0001 | 0.002 | | | | | 0.0002 | 0.0011 | 789 | 716 | Present Invention Example |

| Steel No. | Chemical Composition (mass%) Remainder being Fe and Impurities | | | | | | | | | | | | | | Ac₃ °C | Ar₃ °C | Remarks |
|---|---|---|---|---|---|---|---|---|---|---|---|---|---|---|---|---|---|
| | Cr | Mo | Ni | Co | W | Sn | Nb | V | Zr | Ca | Mg | REM | Sb | Pb | | | |
| 39 | 0.230 | 0.078 | 0.132 | 0.0002 | 0.0001 | 0.1530 | 0.0001 | 0.002 | | | | | 0.0002 | 0.0002 | 791 | 702 | Present Invention Example |
| 40 | 0.950 | 0.036 | 0.077 | 0.0002 | 0.0340 | 0.0440 | 0.0001 | 0.002 | | | | | 0.0002 | 0.0019 | 779 | 683 | Present Invention Example |
| 41 | 0.032 | 0.940 | 0.033 | 0.0002 | 0.0001 | 0.0690 | 0.0001 | 0.002 | | | | | 0.0002 | 0.0008 | 814 | 653 | Present Invention Example |
| 42 | 0.033 | 0.067 | 0.931 | 0.0002 | 0.0001 | 0.0480 | 0.0001 | 0.002 | | | | | 0.0003 | 0.0093 | 784 | 617 | Present Invention Example |
| 43 | 0.042 | 0.035 | 0.031 | 0.4900 | 0.0001 | 0.0560 | 0.0001 | 0.002 | | | | | 0.0003 | 0.0012 | 774 | 706 | Present Invention Example |
| 44 | 0.221 | 0.039 | 0.024 | 0.0030 | 0.4900 | 0.0330 | 0.0001 | 0.002 | | | | | 0.0002 | 0.0005 | 787 | 732 | Present Invention Example |
| 45 | 0.192 | 0.039 | 0.023 | 0.0010 | 0.0001 | 0.4920 | 0.0001 | 0.002 | | | | | 0.0002 | 0.0011 | 780 | 710 | Present Invention Example |
| 46 | 0.120 | 0.021 | 0.031 | 0.0030 | 0.0001 | 0.0210 | 0.0970 | 0.002 | | 0.0023 | | | 0.0032 | 0.0004 | 785 | 710 | Present Invention Example |
| 47 | 0.210 | 0.039 | 0.023 | 0.0030 | 0.0001 | 0.0200 | 0.0001 | 0.098 | | | | | 0.0002 | 0.0002 | 769 | 656 | Present Invention Example |
| 48 | 0.213 | 0.031 | 0.029 | 0.0030 | | 0.0390 | 0.0001 | 0.002 | 0.097 | | | | 0.0002 | 0.0002 | 777 | 708 | Present Invention Example |

EP 4 667 600 A1

| Steel No. | Chemical Composition (mass%) Remainder being Fe and Impurities | | | | | | | | | | | | | | Ac₃ °C | Ar₃ °C | Remarks |
|---|---|---|---|---|---|---|---|---|---|---|---|---|---|---|---|---|---|
| | Cr | Mo | Ni | Co | W | Sn | Nb | V | Zr | Ca | Mg | REM | Sb | Pb | | | |
| 49 | 0.210 | 0.040 | 0.023 | 0.0030 | 0.0001 | 0.0200 | 0.0001 | 0.002 | | | | | 0.0002 | 0.0002 | 785 | 721 | Present Invention Example |
| 50 | 0.193 | 0.036 | 0.042 | 0.0003 | 0.0020 | 0.0390 | 0.0003 | 0.003 | | | | | 0.0002 | 0.0011 | 790 | 714 | Present Invention Example |
| 51 | 0.241 | 0.019 | 0.031 | 0.0002 | 0.0005 | 0.0490 | 0.0002 | 0.002 | | | | | 0.0003 | 0.0012 | 783 | 652 | Present Invention Example |
| 52 | 0.012 | 0.061 | 0.052 | 0.0001 | 0.0003 | 0.0390 | 0.0001 | 0.002 | | | | | 0.0002 | 0.0002 | 837 | 725 | Present Invention Example |
| 53 | 0.243 | 0.039 | 0.049 | 0.0002 | 0.0001 | 0.0360 | 0.0001 | 0.002 | | | | | 0.0002 | 0.0011 | 831 | 743 | Present Invention Example |
| 54 | 0.210 | 0.023 | 0.051 | 0.0003 | 0.0001 | 0.0330 | 0.0001 | 0.002 | | | | | 0.0002 | 0.0011 | 796 | 653 | Present Invention Example |
| 55 | 0.142 | 0.032 | 0.049 | | | 0.0470 | 0.0001 | 0.002 | | | | | 0.0002 | 0.0008 | 805 | 717 | Present Invention Example |

[Table 2C]

| Steel No. | Chemical Composition (mass%) Remainder being Fe and Impurities | | | | | | | | | | | | | | Ac₃ °C | Ar₃ °C | Remarks |
|---|---|---|---|---|---|---|---|---|---|---|---|---|---|---|---|---|---|
| | Cr | Mo | Ni | Co | W | Sn | Nb | V | Zr | Ca | Mg | REM | Sb | Pb | | | |
| 56 | 0.054 | 0.032 | 0.033 | 0.0003 | 0.0001 | 0.0330 | 0.0003 | 0.001 | 0.001 | | | | 0.0003 | 0.0003 | 863 | 793 | Comparative Example |
| 57 | 0.139 | 0.056 | 0.061 | 0.0003 | | 0.0410 | 0.0003 | 0.002 | 0.002 | 0.0010 | 0.0030 | | 0.0002 | 0.0003 | 792 | 756 | Comparative Example |
| 58 | 0.050 | 0.041 | 0.032 | 0.0002 | 0.0001 | 0.0480 | 0.0003 | 0.002 | 0.002 | | 0.0001 | | 0.0002 | 0.0011 | 818 | 791 | Comparative Example |
| 59 | 0.042 | 0.043 | 0.053 | 0.0012 | 0.0004 | 0.0360 | 0.0430 | 0.002 | 0.002 | 0.0021 | 0.0001 | | 0.0003 | 0.0013 | 846 | 815 | Comparative Example |
| 60 | 0.233 | 0.049 | 0.052 | 0.0001 | 0.0001 | 0.0320 | 0.0001 | 0.001 | 0.001 | 0.0001 | 0.0011 | | 0.0003 | 0.0008 | 774 | 694 | Comparative Example |
| 61 | 0.233 | 0.039 | 0.039 | 0.0001 | 0.0001 | 0.0390 | 0.0001 | 0.001 | | | | 0.0001 | 0.0003 | 0.0008 | 775 | 703 | Comparative Example |
| 62 | 0.199 | 0.031 | 0.043 | 0.0002 | 0.0010 | 0.0310 | | 0.001 | 0.0001 | 0.0001 | | 0.0001 | 0.0003 | 0.0009 | 786 | 714 | Comparative Example |
| 63 | 0.203 | 0.038 | 0.041 | 0.0002 | 0.0010 | 0.0310 | | 0.001 | 0.0001 | 0.0001 | | 0.0001 | 0.0003 | 0.0002 | 788 | 714 | Comparative Example |
| 64 | 0.035 | 0.063 | 0.055 | 0.0001 | 0.0003 | 0.0430 | 0.0001 | 0.002 | | | | | 0.0002 | 0.0008 | 838 | 726 | Comparative Example |
| 65 | 0.210 | 0.040 | 0.023 | 0.0030 | 0.0001 | 0.0200 | 0.0001 | 0.002 | | | | | 0.0002 | 0.0002 | 785 | 721 | Present Invention Example |
| 66 | 0.210 | 0.040 | 0.023 | 0.0030 | 0.0001 | 0.0200 | 0.0001 | 0.002 | | | | | 0.0002 | 0.0002 | 785 | 721 | Present Invention Example |
| 67 | 0.012 | 0.061 | 0.052 | 0.0001 | 0.0003 | 0.0390 | 0.0001 | 0.002 | | | | | 0.0002 | 0.0002 | 837 | 725 | Present Invention Example |
| 68 | 0.193 | 0.036 | 0.042 | 0.0003 | 0.0020 | 0.0390 | 0.0003 | 0.003 | | | | | 0.0002 | 0.0011 | 790 | 714 | Present Invention Example |

(continued)

| Steel No. | Chemical Composition (mass%) Remainder being Fe and Impurities | | | | | | | | | | | | | | $Ac_3$ °C | $Ar_3$ °C | Remarks |
|---|---|---|---|---|---|---|---|---|---|---|---|---|---|---|---|---|---|
| | Cr | Mo | Ni | Co | W | Sn | Nb | V | Zr | Ca | Mg | REM | Sb | Pb | | | |
| 69 | 0.193 | 0.036 | 0.042 | 0.0003 | 0.0020 | 0.0390 | 0.0003 | 0.003 | | | | | 0.0002 | 0.0011 | 790 | 714 | Present Invention Example |
| 70 | 0.193 | 0.036 | 0.042 | 0.0003 | 0.0020 | 0.0390 | 0.0003 | 0.003 | | | | | 0.0002 | 0.0011 | 790 | 714 | Present Invention Example |
| 71 | 0.193 | 0.036 | 0.042 | 0.0003 | 0.0020 | 0.0390 | 0.0003 | 0.003 | | | | | 0.0002 | 0.0011 | 790 | 714 | Present Invention Example |
| 72 | | | | | | | | | | | | | | | 782 | 682 | Present Invention Example |
| 73 | | | | | | | | | | | | | | | 836 | 726 | Present Invention Example |
| 74 | 0.234 | 0.073 | 0.133 | 0.0003 | 0.0011 | 0.0567 | | 0.001 | 0.0001 | 0.0001 | | | 0.0182 | 0.0009 | 788 | 701 | Present Invention Example |
| Each underline indicates that the underlined number is outside the range of the present invention. | | | | | | | | | | | | | | | | | |

# EP 4 667 600 A1

[Table 3A]

| Steel Sheet No. | Steel No. | Slab Heating Heating Temperature (°C) | Rough Rolling Total Interpass Time in Temperature Range of 1050°C to 1150°C Sec | Finish Rolling Number of Stages | Total Rolling Reduction (%) | Entry Side Temperature (°C) | Completion Temperature (°C) | Cold Rolling Cold Rolling Ratio (%) | Coating Immersion Time (Sec) | Left Side of Expression (5) | Smaller One of Right Side of Expression (5) and 8.00 | Remarks |
|---|---|---|---|---|---|---|---|---|---|---|---|---|
| 1 | 1 | 1240 | 15 | 7 | 91 | 1057 | 922 | 60 | 3.20 | 0.04 | 8.00 | Present Invention Example |
| 2 | 2 | 1223 | 21 | 7 | 98 | 1060 | 923 | 50 | 3.10 | 0.03 | 8.00 | Present Invention Example |
| 3 | 3 | 1235 | 22 | 7 | 94 | 1049 | 918 | 50 | 2.80 | 0.04 | 8.00 | Present Invention Example |
| 4 | 4 | 1256 | 23 | 7 | 94 | 1050 | 917 | 50 | 2.20 | 0.03 | 8.00 | Present Invention Example |
| 5 | 5 | 1220 | 35 | 7 | 90 | 1039 | 920 | 50 | 2.30 | 0.04 | 8.00 | Present Invention Example |
| 6 | 6 | 1252 | 19 | 7 | 90 | 1061 | 913 | 50 | 4.20 | 0.03 | 8.00 | Present Invention Example |
| 7 | 7 | 1253 | 61 | 7 | 89 | 1058 | 910 | 50 | 4.30 | 0.04 | 8.00 | Present Invention Example |
| 8 | 8 | 1223 | 34 | 7 | 89 | 1057 | 905 | 50 | 3.50 | 0.05 | 8.00 | Present Invention Example |
| 9 | 9 | 1214 | 18 | 7 | 93 | 1040 | 903 | 50 | 3.30 | 0.03 | 8.00 | Present Invention Example |
| 10 | 10 | 1278 | 14 | 7 | 93 | 1044 | 910 | 50 | 1.20 | 0.03 | 8.00 | Present Invention Example |
| 11 | 11 | 1267 | 18 | 7 | 93 | 1047 | 913 | 50 | 1.30 | 0.05 | 8.00 | Present Invention Example |
| 12 | 12 | 1278 | 13 | 7 | 88 | 1052 | 912 | 50 | 5.30 | 0.06 | 8.00 | Present Invention Example |
| 13 | 13 | 1251 | 23 | 7 | 88 | 1058 | 923 | 50 | 5.20 | 0.03 | 8.00 | Present Invention Example |
| 14 | 14 | 1277 | 28 | 7 | 88 | 1050 | 920 | 50 | 4.30 | 0.04 | 8.00 | Present Invention Example |
| 15 | 15 | 1329 | 41 | 7 | 88 | 1056 | 918 | 50 | 4.20 | 0.05 | 8.00 | Present Invention Example |
| 16 | 16 | 1330 | 24 | 7 | 92 | 1041 | 901 | 50 | 3.30 | 0.06 | 8.00 | Present Invention Example |
| 17 | 17 | 1281 | 21 | 7 | 92 | 1063 | 895 | 50 | 3.20 | 0.05 | 8.00 | Present Invention Example |
| 18 | 18 | 1271 | 25 | 7 | 92 | 1043 | 911 | 50 | 3.50 | 0.03 | 8.00 | Present Invention Example |
| 19 | 19 | 1210 | 23 | 7 | 92 | 1055 | 913 | 50 | 2.90 | 0.04 | 8.00 | Present Invention Example |
| 20 | 20 | 1253 | 19 | 7 | 90 | 1054 | 923 | 50 | 2.80 | 0.03 | 4.85 | Present Invention Example |
| 21 | 21 | 1254 | 13 | 7 | 90 | 1060 | 922 | 50 | 2.30 | 0.03 | 6.30 | Present Invention Example |
| 22 | 22 | 1248 | 19 | 7 | 90 | 1054 | 918 | 50 | 3.30 | 0.03 | 7.44 | Present Invention Example |
| 23 | 23 | 1255 | 20 | 7 | 90 | 1059 | 915 | 50 | 2.90 | 0.03 | 8.00 | Present Invention Example |
| 24 | 24 | 1252 | 19 | 7 | 90 | 1053 | 913 | 50 | 3.20 | 0.04 | 8.00 | Present Invention Example |
| 25 | 25 | 1245 | 20 | 7 | 90 | 1058 | 916 | 50 | 4.30 | 0.06 | 8.00 | Present Invention Example |
| 26 | 26 | 1240 | 19 | 7 | 90 | 1050 | 913 | 50 | 4.40 | 0.20 | 8.00 | Present Invention Example |
| 27 | 27 | 1251 | 31 | 7 | 90 | 1053 | 916 | 50 | 4.30 | 0.32 | 8.00 | Present Invention Example |
| 28 | 28 | 1249 | 71 | 7 | 90 | 1055 | 918 | 50 | 5.50 | 0.95 | 8.00 | Present Invention Example |

[Table 3B]

| Steel Sheet No. | Steel No. | Slab Heating Heating Temperature (°C) | Rough Rolling Total Interpass Time in Temperature Range of 1050°C to 1150°C Sec | Finish Rolling Number of Stages | Total Rolling Reduction (%) | Entry Side Temperature (°C) | Completion Temperature (°C) | Cold Rolling Cold Rolling Ratio (%) | Coating Immersion Time (Sec) | Left Side of Expression (5) | Smaller One of Right Side of Expression (5) and 8.00 | Remarks |
|---|---|---|---|---|---|---|---|---|---|---|---|---|
| 29 | 29 | 1231 | 32 | 7 | 88 | 1049 | 922 | 50 | 3.00 | 0.03 | 4.77 | Present Invention Example |
| 30 | 30 | 1237 | 15 | 7 | 88 | 1040 | 918 | 50 | 1.90 | 0.03 | 8.00 | Present Invention Example |
| 31 | 31 | 1235 | 33 | 7 | 88 | 1039 | 921 | 50 | 5.10 | 0.04 | 8.00 | Present Invention Example |
| 32 | 32 | 1238 | 32 | 7 | 88 | 1060 | 919 | 50 | 3.20 | 0.08 | 8.00 | Present Invention Example |
| 33 | 33 | 1230 | 24 | 7 | 88 | 1066 | 924 | 50 | 3.30 | 0.30 | 8.00 | Present Invention Example |
| 34 | 34 | 1242 | 19 | 7 | 88 | 1067 | 916 | 50 | 5.40 | 0.96 | 8.00 | Present Invention Example |
| 35 | 35 | 1283 | 15 | 7 | 88 | 1069 | 905 | 50 | 3.20 | 0.03 | 8.00 | Present Invention Example |
| 36 | 36 | 1275 | 13 | 7 | 86 | 1063 | 903 | 50 | 1.80 | 0.03 | 8.00 | Present Invention Example |
| 37 | 37 | 1278 | 19 | 7 | 86 | 1054 | 903 | 50 | 1.50 | 0.03 | 8.00 | Present Invention Example |
| 38 | 38 | 1275 | 34 | 7 | 86 | 1050 | 898 | 50 | 3.20 | 0.03 | 8.00 | Present Invention Example |
| 39 | 39 | 1271 | 18 | 7 | 86 | 1065 | 907 | 50 | 2.20 | 0.06 | 8.00 | Present Invention Example |
| 40 | 40 | 1252 | 13 | 7 | 95 | 1063 | 913 | 50 | 3.00 | 0.04 | 8.00 | Present Invention Example |
| 41 | 41 | 1255 | 19 | 7 | 95 | 1064 | 923 | 50 | 3.40 | 0.06 | 8.00 | Present Invention Example |
| 42 | 42 | 1253 | 27 | 7 | 94 | 1048 | 916 | 50 | 3.30 | 0.05 | 8.00 | Present Invention Example |
| 43 | 43 | 1219 | 17 | 7 | 94 | 1040 | 900 | 50 | 3.20 | 0.05 | 8.00 | Present Invention Example |
| 44 | 44 | 1215 | 31 | 7 | 85 | 1048 | 913 | 50 | 2.90 | 0.03 | 8.00 | Present Invention Example |
| 45 | 45 | 1283 | 22 | 7 | 85 | 1044 | 910 | 50 | 5.40 | 0.04 | 8.00 | Present Invention Example |
| 46 | 46 | 1288 | 39 | 7 | 90 | 1044 | 920 | 50 | 5.50 | 0.07 | 8.00 | Present Invention Example |
| 47 | 47 | 1235 | 20 | 7 | 90 | 1078 | 923 | 50 | 5.30 | 0.04 | 8.00 | Present Invention Example |
| 48 | 48 | 1233 | 19 | 7 | 90 | 1049 | 921 | 50 | 5.30 | 0.03 | 8.00 | Present Invention Example |
| 49 | 49 | 1247 | 23 | 7 | 90 | 1049 | 922 | 50 | 3.10 | 0.03 | 8.00 | Present Invention Example |
| 50 | 50 | 1245 | 27 | 7 | 90 | 1048 | 920 | 50 | 3.30 | 0.03 | 8.00 | Present Invention Example |
| 51 | 51 | 1247 | 15 | 7 | 92 | 1040 | 918 | 50 | 3.20 | 0.06 | 8.00 | Present Invention Example |
| 52 | 52 | 1236 | 14 | 7 | 93 | 1052 | 915 | 50 | 2.90 | 0.03 | 8.00 | Present Invention Example |
| 53 | 53 | 1239 | 19 | 7 | 93 | 1050 | 913 | 50 | 2.80 | 0.05 | 8.00 | Present Invention Example |
| 54 | 54 | 1225 | 23 | 7 | 94 | 1064 | 919 | 45 | 2.10 | 0.03 | 8.00 | Present Invention Example |
| 55 | 55 | 1247 | 38 | 7 | 95 | 1059 | 923 | 40 | 2.20 | 0.05 | 8.00 | Present Invention Example |

# EP 4 667 600 A1

[Table 3C]

| Steel Sheet No. | Steel No. | Slab Heating Heating Temperature (°C) | Rough Rolling Total Interpass Time in Temperature Range of 1050°C to 1150°C Sec | Finish Rolling Number of Stages | Total Rolling Reduction (%) | Entry Side Temperature (°C) | Completion Temperature (°C) | Cold Rolling Cold Rolling Ratio (%) | Coating Immersion Time (Sec) | Left Side of Expression (5) | Smaller One of Right Side of Expression (5) and 8.00 | Remarks |
|---|---|---|---|---|---|---|---|---|---|---|---|---|
| 56 | 56 | 1240 | 61 | 7 | 93 | 1057 | 921 | 40 | 2.30 | 0.04 | 8.00 | Comparative Example |
| 57 | 57 | 1244 | 32 | 7 | 92 | 1060 | 914 | 50 | 2.10 | 0.03 | 8.00 | Comparative Example |
| 58 | 58 | 1245 | 31 | 7 | 93 | 1048 | 910 | 40 | 2.00 | 0.03 | 8.00 | Comparative Example |
| 59 | 59 | 1243 | 32 | 7 | 89 | 1047 | 908 | 60 | 2.10 | 0.03 | 8.00 | Comparative Example |
| 60 | 60 | 1231 | 33 | 7 | 90 | 1053 | 900 | 50 | 3.40 | 0.06 | 8.00 | Comparative Example |
| 61 | 61 | 1233 | 19 | 7 | 90 | 1054 | 915 | 50 | 3.90 | 0.03 | 8.00 | Comparative Example |
| 62 | 62 | 1232 | 19 | 7 | 90 | 1058 | 915 | 50 | 1.30 | 0.02 | 0.50 | Comparative Example |
| 63 | 63 | 1238 | 19 | 7 | 90 | 1063 | 918 | 50 | 1.40 | 0.02 | 0.01 | Comparative Example |
| 64 | 64 | 1235 | 14 | 7 | 88 | 1065 | 914 | 60 | 1.50 | 0.02 | 0.05 | Comparative Example |
| 65 | 65 | 1267 | 125 | 7 | 90 | 1063 | 920 | 50 | 3.10 | 0.03 | 8.00 | Comparative Example |
| 66 | 66 | 1268 | 144 | 7 | 90 | 1054 | 922 | 50 | 3.20 | 0.03 | 8.00 | Comparative Example |
| 67 | 67 | 1265 | 131 | 7 | 88 | 1050 | 918 | 60 | 2.90 | 0.03 | 8.00 | Comparative Example |
| 68 | 68 | 1244 | 27 | 7 | 90 | 1049 | 927 | 50 | 3.30 | 0.03 | 8.00 | Present Invention Example |
| 69 | 69 | 1243 | 27 | 7 | 90 | 1044 | 925 | 50 | 3.30 | 0.03 | 8.00 | Present Invention Example |
| 70 | 70 | 1244 | 27 | 7 | 90 | 1047 | 921 | 50 | 3.30 | 0.03 | 8.00 | Present Invention Example |
| 71 | 71 | 1238 | 27 | 7 | 90 | 1059 | 923 | 50 | 3.30 | 0.03 | 8.00 | Present Invention Example |
| 72 | 72 | 1232 | 24 | 7 | 90 | 1060 | 918 | 50 | 3.20 | 0.03 | 8.00 | Present Invention Example |
| 73 | 73 | 1233 | 15 | 7 | 91 | 1049 | 915 | 60 | 2.80 | 0.03 | 8.00 | Present Invention Example |
| 74 | 65 | 1265 | 115 | 7 | 90 | 1049 | 904 | 50 | 3.11 | 0.03 | 8.00 | Present Invention Example |
| 75 | 65 | 1266 | 98 | 7 | 90 | 1048 | 908 | 50 | 3.12 | 0.03 | 8.00 | Present Invention Example |
| 76 | 28 | 1248 | 81 | 7 | 90 | 1054 | 913 | 50 | 5.51 | 0.95 | 8.00 | Present Invention Example |
| 77 | 50 | 1245 | 27 | 7 | 90 | 1053 | 921 | 50 | 7.70 | 0.03 | 8.00 | Present Invention Example |
| 78 | 33 | 1231 | 24 | 7 | 88 | 1053 | 923 | 50 | 0.28 | 0.30 | 8.00 | Comparative Example |
| 79 | 74 | 1249 | 18 | 7 | 90 | 1055 | 920 | 50 | 3.45 | 0.03 | 7.94 | Present Invention Example |
| 80 | 62 | 1233 | 19 | 7 | 90 | 1052 | 914 | 50 | 1.50 | 0.02 | 0.50 | Comparative Example |
| 81 | 66 | 1267 | 145 | 7 | 90 | 1051 | 921 | 50 | 9.20 | 0.03 | 8.00 | Comparative Example |
| 82 | 49 | 1248 | 23 | 7 | 90 | 1050 | 922 | 50 | 3.10 | 0.03 | 8.00 | Present Invention Example |

Each underline indicates that the producing condition is not preferable.

[Table 4A]

| Steel Sheet No. | Steel No. | Aluminum-Coated Steel Sheet for Hot Stamping Sheet Thickness mm | Microstructure of Steel Sheet Ferrite Area% | Martensite, Bainite, Pearlite, Cementite Area% | Fe-Al-Si Alloy Layer Thickness of Alloy Layer μm | $Cu_i$ Atom% | $Cu_0$ Atom% | Right Side of Expression (4) (0.40 x $Cu_0$) Atom% | Chemical Composition of Al-Based Coating Layer Al Mass% | Si Mass% | Others Mass% | Remarks |
|---|---|---|---|---|---|---|---|---|---|---|---|---|
| 1 | 1 | 1.2 | 94 | 6 | 4 | 0.013 | 0.135 | 0.054 | 87.9 | 9.5 | 2.6 | Present Invention Example |
| 2 | 2 | 1.2 | 78 | 22 | 5 | 0.013 | 0.089 | 0.035 | 88.1 | 9.6 | 2.3 | Present Invention Example |
| 3 | 3 | 1.0 | 82 | 18 | 6 | 0.012 | 0.134 | 0.054 | 87.6 | 9.3 | 3.1 | Present Invention Example |
| 4 | 4 | 1.0 | 81 | 19 | 7 | 0.009 | 0.098 | 0.039 | 87.5 | 9.2 | 3.3 | Present Invention Example |
| 5 | 5 | 1.6 | 79 | 21 | 4 | 0.009 | 0.114 | 0.046 | 89.7 | 8.4 | 1.9 | Present Invention Example |
| 6 | 6 | 1.6 | 83 | 17 | 3 | 0.020 | 0.080 | 0.032 | 87.9 | 9.3 | 2.8 | Present Invention Example |
| 7 | 7 | 1.8 | 21 | 79 | 4 | 0.021 | 0.145 | 0.058 | 86.2 | 10.4 | 3.4 | Present Invention Example |
| 8 | 8 | 1.8 | 32 | 68 | 8 | 0.015 | 0.222 | 0.089 | 88.5 | 8.2 | 3.3 | Present Invention Example |
| 9 | 9 | 1.2 | 71 | 29 | 7 | 0.014 | 0.089 | 0.035 | 88.4 | 9.3 | 2.3 | Present Invention Example |
| 10 | 10 | 1.2 | 83 | 17 | 6 | 0.006 | 0.073 | 0.029 | 85.5 | 13.2 | 1.3 | Present Invention Example |
| 11 | 11 | 1.2 | 77 | 23 | 6 | 0.006 | 0.174 | 0.070 | 85.2 | 13.2 | 1.6 | Present Invention Example |
| 12 | 12 | 2.0 | 61 | 39 | 7 | 0.031 | 0.236 | 0.094 | 91.4 | 6.3 | 2.3 | Present Invention Example |
| 13 | 13 | 2.0 | 63 | 37 | 7 | 0.029 | 0.087 | 0.035 | 90.7 | 6.1 | 3.2 | Present Invention Example |
| 14 | 14 | 2.0 | 73 | 27 | 6 | 0.022 | 0.136 | 0.054 | 87.3 | 10.2 | 2.5 | Present Invention Example |
| 15 | 15 | 2.0 | 51 | 49 | 6 | 0.020 | 0.193 | 0.077 | 87.2 | 9.5 | 3.3 | Present Invention Example |
| 16 | 16 | 1.4 | 66 | 34 | 5 | 0.014 | 0.252 | 0.101 | 88.1 | 9.4 | 2.5 | Present Invention Example |
| 17 | 17 | 1.4 | 71 | 29 | 7 | 0.013 | 0.196 | 0.079 | 87.5 | 9.0 | 3.5 | Present Invention Example |
| 18 | 18 | 1.4 | 73 | 27 | 5 | 0.014 | 0.097 | 0.039 | 89.9 | 8.0 | 2.1 | Present Invention Example |
| 19 | 19 | 1.4 | 71 | 29 | 7 | 0.012 | 0.141 | 0.056 | 87.2 | 11.2 | 1.6 | Present Invention Example |
| 20 | 20 | 1.6 | 77 | 23 | 5 | 0.011 | 0.057 | 0.023 | 89.3 | 9.4 | 1.3 | Present Invention Example |
| 21 | 21 | 1.6 | 73 | 27 | 6 | 0.009 | 0.061 | 0.024 | 88.0 | 9.5 | 2.5 | Present Invention Example |
| 22 | 22 | 1.6 | 76 | 24 | 6 | 0.014 | 0.063 | 0.025 | 88.3 | 9.4 | 2.3 | Present Invention Example |
| 23 | 23 | 1.6 | 81 | 19 | 7 | 0.012 | 0.076 | 0.031 | 89.4 | 9.3 | 1.3 | Present Invention Example |
| 24 | 24 | 1.6 | 73 | 27 | 6 | 0.014 | 0.133 | 0.053 | 87.9 | 9.6 | 2.5 | Present Invention Example |
| 25 | 25 | 1.6 | 81 | 19 | 4 | 0.020 | 0.259 | 0.104 | 88.3 | 9.4 | 2.3 | Present Invention Example |
| 26 | 26 | 1.6 | 83 | 17 | 5 | 0.022 | 0.870 | 0.348 | 88.4 | 8.5 | 3.1 | Present Invention Example |
| 27 | 27 | 1.6 | 77 | 23 | 6 | 0.021 | 1.342 | 0.537 | 89.2 | 8.7 | 2.1 | Present Invention Example |
| 28 | 28 | 1.6 | 71 | 29 | 6 | 0.035 | 3.020 | 1.208 | 87.6 | 9.2 | 3.2 | Present Invention Example |

[Table 4B]

| Steel Sheet No. | Steel No. | Aluminum-Coated Steel Sheet for Hot Stamping | | | | | | | | | | Remarks |
|---|---|---|---|---|---|---|---|---|---|---|---|---|
| | | Sheet Thickness mm | Microstructure of Steel Sheet | | Fe-Al-Si Alloy Layer | | | | Chemical Composition of Al-Based Coating Layer | | | |
| | | | Ferrite Area% | Martensite, Bainite, Pearlite, Cementite Area% | Thickness of Alloy Layer μm | $Cu_i$ Atom% | $Cu_0$ Atom% | Right Side of Expression (4) (0.40 x $Cu_0$) Atom% | Al Mass% | Si Mass% | Others Mass% | |
| 29 | 29 | 2.0 | 74 | 26 | 6 | 0.012 | 0.057 | 0.023 | 86.3 | 10.4 | 3.3 | Present Invention Example |
| 30 | 30 | 2.0 | 81 | 19 | 5 | 0.008 | 0.078 | 0.031 | 87.4 | 10.4 | 2.2 | Present Invention Example |
| 31 | 31 | 2.0 | 63 | 37 | 5 | 0.028 | 0.168 | 0.067 | 87.3 | 9.5 | 3.2 | Present Invention Example |
| 32 | 32 | 2.0 | 67 | 33 | 6 | 0.013 | 0.333 | 0.133 | 87.0 | 10.5 | 2.5 | Present Invention Example |
| 33 | 33 | 2.0 | 71 | 29 | 5 | 0.014 | 1.348 | 0.539 | 88.5 | 9.4 | 2.1 | Present Invention Example |
| 34 | 34 | 2.0 | 78 | 22 | 6 | 0.034 | 3.150 | 1.260 | 88.4 | 10.4 | 1.2 | Present Invention Example |
| 35 | 35 | 2.0 | 77 | 23 | 6 | 0.013 | 0.060 | 0.024 | 86.7 | 10.1 | 3.2 | Present Invention Example |
| 36 | 36 | 2.3 | 73 | 27 | 5 | 0.007 | 0.104 | 0.041 | 91.3 | 7.2 | 1.5 | Present Invention Example |
| 37 | 37 | 2.3 | 71 | 29 | 6 | 0.007 | 0.085 | 0.034 | 88.2 | 8.6 | 3.2 | Present Invention Example |
| 38 | 38 | 2.3 | 76 | 24 | 7 | 0.013 | 0.094 | 0.037 | 89.6 | 8.2 | 2.2 | Present Invention Example |
| 39 | 39 | 2.3 | 73 | 27 | 8 | 0.009 | 0.234 | 0.094 | 89.9 | 7.4 | 2.7 | Present Invention Example |
| 40 | 40 | 0.8 | 31 | 69 | 7 | 0.012 | 0.146 | 0.058 | 89.4 | 8.3 | 2.3 | Present Invention Example |
| 41 | 41 | 0.8 | 45 | 55 | 3 | 0.014 | 0.237 | 0.095 | 87.4 | 9.4 | 3.2 | Present Invention Example |
| 42 | 42 | 1.0 | 44 | 56 | 7 | 0.014 | 0.204 | 0.082 | 88.1 | 9.5 | 2.4 | Present Invention Example |
| 43 | 43 | 1.0 | 76 | 24 | 6 | 0.014 | 0.200 | 0.080 | 88.1 | 9.7 | 2.2 | Present Invention Example |
| 44 | 44 | 2.5 | 53 | 47 | 8 | 0.011 | 0.086 | 0.034 | 86.4 | 12.3 | 1.3 | Present Invention Example |
| 45 | 45 | 2.5 | 77 | 23 | 9 | 0.033 | 0.114 | 0.046 | 87.3 | 9.4 | 3.3 | Present Invention Example |
| 46 | 46 | 1.6 | 61 | 39 | 5 | 0.033 | 0.348 | 0.139 | 89.4 | 9.3 | 1.3 | Present Invention Example |
| 47 | 47 | 1.6 | 63 | 37 | 4 | 0.030 | 0.142 | 0.057 | 87.8 | 9.9 | 2.3 | Present Invention Example |
| 48 | 48 | 1.6 | 74 | 26 | 5 | 0.030 | 0.085 | 0.034 | 88.3 | 10.4 | 1.3 | Present Invention Example |
| 49 | 49 | 1.6 | 73 | 27 | 7 | 0.012 | 0.094 | 0.038 | 87.6 | 10.2 | 2.2 | Present Invention Example |
| 50 | 50 | 1.6 | 73 | 27 | 7 | 0.014 | 0.088 | 0.035 | 88.2 | 9.3 | 2.5 | Present Invention Example |
| 51 | 51 | 1.4 | 72 | 28 | 8 | 0.013 | 0.196 | 0.078 | 89.1 | 8.1 | 2.8 | Present Invention Example |
| 52 | 52 | 1.2 | 90 | 10 | 7 | 0.012 | 0.090 | 0.036 | 88.0 | 9.2 | 2.8 | Present Invention Example |
| 53 | 53 | 1.2 | 88 | 12 | 5 | 0.011 | 0.195 | 0.078 | 86.5 | 11.2 | 2.3 | Present Invention Example |
| 54 | 54 | 1.0 | 84 | 16 | 5 | 0.008 | 0.089 | 0.036 | 88.4 | 9.3 | 2.3 | Present Invention Example |
| 55 | 55 | 1.0 | 83 | 17 | 6 | 0.009 | 0.207 | 0.083 | 87.4 | 10.4 | 2.2 | Present Invention Example |

[Table 4C]

| Steel Sheet No. | Steel No. | Aluminum-Coated Steel Sheet for Hot Stamping | | | | | | | | | | Remarks |
|---|---|---|---|---|---|---|---|---|---|---|---|---|
| | | Sheet Thickness mm | Microstructure of Steel Sheet | | Fe-Al-Si Alloy Layer | | | | Chemical Composition of Al-Based Coating Layer | | | |
| | | | Ferrite Area% | Martensite, Bainite, Pearlite, Cementite Area% | Thickness of Alloy Layer μm | $Cu_i$ Atom% | $Cu_0$ Atom% | Right Side of Expression (4) (0.40 x $Cu_0$) Atom% | Al Mass% | Si Mass% | Others Mass% | |
| 56 | 56 | 1.4 | 96 | 4 | 7 | 0.009 | 0.141 | 0.057 | 88.3 | 9.3 | 2.4 | Comparative Example |
| 57 | 57 | 1.4 | 77 | 23 | 4 | 0.008 | 0.085 | 0.034 | 88.6 | 9.1 | 2.3 | Comparative Example |
| 58 | 58 | 1.4 | 81 | 19 | 3 | 0.009 | 0.084 | 0.034 | 88.7 | 9.1 | 2.2 | Comparative Example |
| 59 | 59 | 1.4 | 77 | 23 | 4 | 0.007 | 0.083 | 0.033 | 88.5 | 9.1 | 2.4 | Comparative Example |
| 60 | 60 | 1.6 | 73 | 27 | 5 | 0.015 | 0.222 | 0.089 | 88.3 | 10.2 | 1.5 | Comparative Example |
| 61 | 61 | 1.6 | 76 | 24 | 6 | 0.018 | 0.096 | 0.038 | 87.4 | 9.4 | 3.2 | Comparative Example |
| 62 | 62 | 1.6 | 77 | 23 | 7 | 0.015 | 0.034 | 0.013 | 89.1 | 8.1 | 2.8 | Comparative Example |
| 63 | 63 | 1.6 | 75 | 25 | 6 | 0.007 | 0.014 | 0.005 | 89.9 | 8.2 | 1.9 | Comparative Example |
| 64 | 64 | 1.6 | 62 | 38 | 6 | 0.015 | 0.022 | 0.009 | 89.4 | 7.8 | 2.8 | Comparative Example |
| 65 | 65 | 1.6 | 67 | 33 | 5 | 0.045 | 0.093 | 0.037 | 89.4 | 9.3 | 1.3 | Comparative Example |
| 66 | 66 | 1.6 | 64 | 36 | 5 | 0.056 | 0.093 | 0.037 | 88.7 | 10.1 | 1.2 | Comparative Example |
| 67 | 67 | 1.6 | 65 | 35 | 5 | 0.067 | 0.084 | 0.034 | 89.2 | 9.5 | 1.3 | Comparative Example |
| 68 | 68 | 1.6 | 73 | 27 | 7 | 0.014 | 0.088 | 0.035 | 87.4 | 9.3 | 3.3 | Present Invention Example |
| 69 | 69 | 1.6 | 73 | 27 | 7 | 0.014 | 0.088 | 0.035 | 89.4 | 9.3 | 1.3 | Present Invention Example |
| 70 | 70 | 1.6 | 73 | 27 | 7 | 0.014 | 0.088 | 0.035 | 87.4 | 9.3 | 3.3 | Present Invention Example |
| 71 | 71 | 1.6 | 73 | 27 | 7 | 0.014 | 0.088 | 0.035 | 88.4 | 9.3 | 2.3 | Present Invention Example |
| 72 | 72 | 1.6 | 67 | 35 | 7 | 0.011 | 0.093 | 0.037 | 86.8 | 10.1 | 3.1 | Present Invention Example |
| 73 | 73 | 1.2 | 91 | 9 | 6 | 0.013 | 0.091 | 0.036 | 88.4 | 8.4 | 3.2 | Present Invention Example |
| 74 | 65 | 1.6 | 67 | 33 | 5 | 0.035 | 0.093 | 0.037 | 89.6 | 9.3 | 1.1 | Present Invention Example |
| 75 | 65 | 1.6 | 68 | 32 | 5 | 0.030 | 0.093 | 0.037 | 89.5 | 9.5 | 1.0 | Present Invention Example |
| 76 | 76 | 1.6 | 70 | 30 | 5 | 0.038 | 3.020 | 1.208 | 87.6 | 9.1 | 3.3 | Present Invention Example |
| 77 | 50 | 1.6 | 73 | 27 | 7 | 0.033 | 0.088 | 0.035 | 88.2 | 9.3 | 2.5 | Present Invention Example |
| 78 | 33 | 2.0 | 71 | 29 | - | - | - | - | - | - | - | Comparative Example |
| 79 | 74 | 1.6 | 77 | 23 | 6 | 0.015 | 0.064 | 0.026 | 88.3 | 9.5 | 2.2 | Present Invention Example |
| 80 | 62 | 1.6 | 77 | 23 | 7 | 0.018 | 0.034 | 0.013 | 88.5 | 8.5 | 3 | Comparative Example |
| 81 | 66 | 1.6 | 65 | 34 | 5 | 0.093 | 0.093 | 0.037 | 88.2 | 9.8 | 2 | Comparative Example |
| 82 | 49 | 1.6 | 73 | 27 | 7 | 0.012 | 0.094 | 0.038 | 87.6 | 10.2 | 2.2 | Present Invention Example |

Each underline indicates that the underlined number is outside the range of the present invention.

[Table 5A]

| Manufacture No. | Steel Sheet No. | Steel No. | Microstructure of Steel Sheet | | | Diffusion Layer | | | | | | Cu_m Atom% | Cu_0 Atom% | T_m μm | Right Side (0.8 x T_d + T_m) of Expression (3) μm | Remarks |
|---|---|---|---|---|---|---|---|---|---|---|---|---|---|---|---|---|
| | | | Martensite Area% | Residual Austenite Area% | Ferrite + Pearlite + Bainite + Cementite Area% | Al Mass% | Fe Mass% | Si Mass% | Others Mass% | Cu_d Atom% | T_d μm | | | | | |
| 1 | 1 | 1 | 98.8 | 0.8 | 0.4 | 8.0 | 86.8 | 3.0 | 2.2 | 0.078 | 6.0 | 0.055 | 0.103 | 21.0 | 21.6 | Present Invention Example |
| 2 | 2 | 2 | 98.6 | 1.1 | 0.3 | 9.0 | 85.9 | 3.0 | 2.1 | 0.060 | 8.0 | 0.041 | 0.080 | 22.0 | 24.0 | Present Invention Example |
| 3 | 3 | 3 | 98.7 | 1.2 | 0.1 | 8.0 | 87.9 | 2.0 | 2.1 | 0.087 | 7.0 | 0.059 | 0.102 | 28.0 | 28.0 | Present Invention Example |
| 4 | 4 | 4 | 98.0 | 0.8 | 1.2 | 7.0 | 87.0 | 3.0 | 3.0 | 0.055 | 9.0 | 0.043 | 0.091 | 15.0 | 19.2 | Present Invention Example |
| 5 | 5 | 5 | 98.4 | 1.2 | 0.4 | 10.0 | 82.7 | 3.0 | 4.3 | 0.079 | 5.0 | 0.047 | 0.098 | 23.0 | 22.4 | Present Invention Example |
| 6 | 6 | 6 | 94.9 | 1.0 | 4.1 | 11.0 | 83.4 | 4.0 | 1.6 | 0.047 | 4.0 | 0.037 | 0.077 | 26.0 | 24.0 | Present Invention Example |
| 7 | 7 | 7 | 99.3 | 0.5 | 0.2 | 8.0 | 85.7 | 3.0 | 3.3 | 0.097 | 5.0 | 0.058 | 0.114 | 21.0 | 20.8 | Present Invention Example |
| 8 | 8 | 8 | 99.0 | 0.5 | 0.5 | 8.0 | 85.7 | 4.0 | 2.3 | 0.147 | 5.0 | 0.091 | 0.179 | 23.0 | 22.4 | Present Invention Example |
| 9 | 9 | 9 | 99.3 | 0.4 | 0.3 | 9.0 | 85.9 | 3.0 | 2.1 | 0.053 | 7.0 | 0.037 | 0.079 | 17.0 | 19.2 | Present Invention Example |
| 10 | 10 | 10 | 98.9 | 0.4 | 0.7 | 11.0 | 84.1 | 3.0 | 1.9 | 0.048 | 6.0 | 0.033 | 0.072 | 22.0 | 22.4 | Present Invention Example |
| 11 | 11 | 11 | 98.4 | 0.8 | 0.8 | 10.0 | 84.8 | 3.0 | 2.2 | 0.120 | 6.0 | 0.063 | 0.142 | 23.0 | 23.2 | Present Invention Example |
| 12 | 12 | 12 | 97.9 | 0.9 | 1.2 | 10.0 | 85.5 | 2.0 | 2.5 | 0.162 | 5.0 | 0.083 | 0.189 | 9.0 | 11.2 | Present Invention Example |
| 13 | 13 | 13 | 97.8 | 1.2 | 1.0 | 11.0 | 83.8 | 3.0 | 2.2 | 0.052 | 4.0 | 0.040 | 0.073 | 12.0 | 12.8 | Present Invention Example |
| 14 | 14 | 14 | 95.6 | 1.4 | 3.0 | 10.0 | 84.7 | 3.0 | 2.3 | 0.089 | 4.0 | 0.053 | 0.106 | 15.0 | 15.2 | Present Invention Example |
| 15 | 15 | 15 | 97.5 | 1.3 | 1.2 | 9.0 | 85.0 | 4.0 | 2.0 | 0.131 | 13.0 | 0.069 | 0.157 | 18.0 | 24.8 | Present Invention Example |
| 16 | 16 | 16 | 91.5 | 1.2 | 7.3 | 10.0 | 84.8 | 3.0 | 2.2 | 0.157 | 7.0 | 0.098 | 0.173 | 25.0 | 25.6 | Present Invention Example |
| 17 | 17 | 17 | 97.8 | 1.0 | 1.2 | 9.0 | 86.6 | 2.0 | 2.4 | 0.115 | 8.0 | 0.072 | 0.136 | 27.0 | 28.0 | Present Invention Example |
| 18 | 18 | 18 | 90.4 | 0.5 | 9.1 | 11.0 | 83.8 | 3.0 | 2.2 | 0.059 | 7.0 | 0.043 | 0.086 | 17.0 | 19.2 | Present Invention Example |
| 19 | 19 | 19 | 98.6 | 0.8 | 0.6 | 8.0 | 87.8 | 2.0 | 2.2 | 0.089 | 5.0 | 0.058 | 0.112 | 21.0 | 20.8 | Present Invention Example |
| 20 | 20 | 20 | 98.1 | 0.9 | 1.0 | 8.0 | 87.0 | 3.0 | 2.0 | 0.032 | 12.0 | 0.013 | 0.058 | 22.0 | 27.2 | Present Invention Example |
| 21 | 21 | 21 | 97.9 | 0.8 | 1.3 | 7.0 | 86.8 | 4.0 | 2.2 | 0.034 | 7.0 | 0.029 | 0.051 | 22.0 | 23.2 | Present Invention Example |
| 22 | 22 | 22 | 97.9 | 0.9 | 1.2 | 8.0 | 87.0 | 3.0 | 2.0 | 0.031 | 4.0 | 0.026 | 0.059 | 20.0 | 19.2 | Present Invention Example |
| 23 | 23 | 23 | 97.0 | 0.9 | 2.1 | 11.0 | 84.9 | 2.0 | 2.1 | 0.043 | 5.0 | 0.033 | 0.073 | 19.0 | 19.2 | Present Invention Example |
| 24 | 24 | 24 | 97.9 | 0.8 | 1.3 | 8.0 | 86.9 | 3.0 | 2.1 | 0.091 | 7.0 | 0.057 | 0.114 | 31.0 | 30.4 | Present Invention Example |
| 25 | 25 | 25 | 97.6 | 0.9 | 1.5 | 8.0 | 88.5 | 1.0 | 2.5 | 0.164 | 8.0 | 0.090 | 0.192 | 21.0 | 23.2 | Present Invention Example |
| 26 | 26 | 26 | 97.9 | 0.9 | 1.2 | 7.0 | 87.1 | 3.0 | 2.9 | 0.448 | 5.0 | 0.347 | 0.649 | 25.0 | 24.0 | Present Invention Example |
| 27 | 27 | 27 | 97.9 | 0.8 | 1.3 | 11.0 | 82.5 | 3.0 | 3.5 | 0.634 | 8.0 | 0.441 | 1.047 | 22.0 | 24.0 | Present Invention Example |
| 28 | 28 | 28 | 98.0 | 0.8 | 1.2 | 12.0 | 80.5 | 2.0 | 5.5 | 1.890 | 6.0 | 1.035 | 1.975 | 23.0 | 23.2 | Present Invention Example |

[Table 5B]

| Manufacture No. | Steel Sheet No. | Steel No. | Microstructure of Steel Sheet | | | Diffusion Layer | | | | | | Cu_m Atom% | Cu_0 Atom% | T_m μm | Right Side (0.8 x T_d + T_m) of Expression (3) μm | Remarks |
|---|---|---|---|---|---|---|---|---|---|---|---|---|---|---|---|---|
| | | | Martensite Area% | Residual Austenite Area% | Ferrite + Pearlite + Bainite + Cementite Area% | Al Mass% | Fe Mass% | Si Mass% | Others Mass% | Cu_d Atom% | T_d μm | | | | | |
| 29 | 29 | 29 | 97.8 | 0.9 | 1.3 | 13.0 | 82.0 | 3.0 | 2.0 | 0.033 | 7.0 | 0.027 | 0.050 | 23.0 | 24.0 | Present Invention Example |
| 30 | 30 | 30 | 97.7 | 1.2 | 1.1 | 11.0 | 82.8 | 4.0 | 2.2 | 0.051 | 4.0 | 0.033 | 0.066 | 27.0 | 24.8 | Present Invention Example |
| 31 | 31 | 31 | 97.4 | 1.3 | 1.3 | 14.0 | 80.8 | 3.0 | 2.2 | 0.101 | 5.0 | 0.059 | 0.118 | 23.0 | 22.4 | Present Invention Example |
| 32 | 32 | 32 | 97.6 | 1.2 | 1.2 | 13.0 | 82.3 | 2.0 | 2.7 | 0.173 | 9.0 | 0.137 | 0.239 | 19.0 | 22.4 | Present Invention Example |
| 33 | 33 | 33 | 97.6 | 1.3 | 1.1 | 11.0 | 82.3 | 3.0 | 3.7 | 0.937 | 11.0 | 0.460 | 1.012 | 18.0 | 23.2 | Present Invention Example |
| 34 | 34 | 34 | 97.5 | 1.2 | 1.3 | 9.0 | 83.6 | 2.0 | 5.4 | 1.540 | 5.0 | 1.137 | 2.086 | 23.0 | 22.4 | Present Invention Example |
| 35 | 35 | 35 | 97.5 | 1.3 | 1.2 | 12.0 | 83.1 | 3.0 | 1.9 | 0.033 | 7.0 | 0.030 | 0.055 | 23.0 | 24.0 | Present Invention Example |
| 36 | 36 | 36 | 97.5 | 1.2 | 1.3 | 10.0 | 85.1 | 3.0 | 1.9 | 0.056 | 8.0 | 0.042 | 0.080 | 19.0 | 21.6 | Present Invention Example |
| 37 | 37 | 37 | 97.5 | 1.3 | 1.2 | 11.0 | 84.1 | 3.0 | 1.9 | 0.050 | 9.0 | 0.036 | 0.072 | 16.0 | 20.0 | Present Invention Example |
| 38 | 38 | 38 | 96.7 | 1.2 | 2.1 | 11.0 | 82.6 | 4.0 | 2.4 | 0.058 | 9.0 | 0.041 | 0.092 | 16.0 | 20.0 | Present Invention Example |
| 39 | 39 | 39 | 96.6 | 1.1 | 2.3 | 11.0 | 83.1 | 3.0 | 2.9 | 0.142 | 7.0 | 0.093 | 0.202 | 19.0 | 20.8 | Present Invention Example |
| 40 | 40 | 40 | 99.6 | 0.4 | 0.0 | 8.0 | 84.8 | 4.0 | 3.2 | 0.090 | 8.0 | 0.050 | 0.110 | 20.0 | 22.4 | Present Invention Example |
| 41 | 41 | 41 | 97.1 | 2.9 | 0.0 | 7.0 | 87.7 | 3.0 | 2.3 | 0.160 | 7.0 | 0.090 | 0.171 | 22.0 | 23.2 | Present Invention Example |
| 42 | 42 | 42 | 97.1 | 2.8 | 0.1 | 8.0 | 85.7 | 4.0 | 2.3 | 0.127 | 9.0 | 0.077 | 0.151 | 24.0 | 26.4 | Present Invention Example |
| 43 | 43 | 43 | 97.1 | 1.6 | 1.3 | 9.0 | 86.8 | 2.0 | 2.2 | 0.118 | 4.0 | 0.079 | 0.138 | 23.0 | 21.6 | Present Invention Example |
| 44 | 44 | 44 | 96.3 | 2.3 | 1.4 | 13.0 | 82.0 | 3.0 | 2.0 | 0.048 | 3.0 | 0.036 | 0.080 | 20.0 | 18.4 | Present Invention Example |
| 45 | 45 | 45 | 97.7 | 1.1 | 1.2 | 12.0 | 83.7 | 2.0 | 2.3 | 0.080 | 3.0 | 0.047 | 0.099 | 27.0 | 24.0 | Present Invention Example |
| 46 | 46 | 46 | 96.4 | 1.3 | 2.3 | 11.0 | 83.9 | 3.0 | 2.1 | 0.225 | 2.0 | 0.121 | 0.258 | 19.0 | 16.8 | Present Invention Example |
| 47 | 47 | 47 | 96.6 | 1.2 | 2.2 | 13.0 | 81.6 | 3.0 | 2.4 | 0.091 | 7.0 | 0.054 | 0.103 | 23.0 | 24.0 | Present Invention Example |
| 48 | 48 | 48 | 95.7 | 1.1 | 3.2 | 10.0 | 84.1 | 4.0 | 1.9 | 0.054 | 4.0 | 0.034 | 0.070 | 19.0 | 18.4 | Present Invention Example |
| 49 | 49 | 49 | 97.9 | 0.8 | 1.3 | 10.0 | 85.2 | 3.0 | 1.8 | 0.063 | 12.0 | 0.037 | 0.076 | 21.0 | 26.4 | Present Invention Example |
| 50 | 50 | 50 | 97.6 | 1.1 | 1.3 | 9.0 | 85.1 | 4.0 | 1.9 | 0.054 | 10.0 | 0.040 | 0.082 | 24.0 | 27.2 | Present Invention Example |
| 51 | 51 | 51 | 97.6 | 1.2 | 1.2 | 10.0 | 84.3 | 3.0 | 2.7 | 0.126 | 2.0 | 0.068 | 0.143 | 5.0 | 6.4 | Present Invention Example |
| 52 | 52 | 52 | 97.3 | 1.3 | 1.4 | 11.0 | 83.0 | 4.0 | 2.0 | 0.054 | 7.0 | 0.039 | 0.074 | 25.0 | 25.6 | Present Invention Example |
| 53 | 53 | 53 | 97.0 | 1.2 | 1.8 | 12.0 | 82.4 | 3.0 | 2.6 | 0.132 | 3.0 | 0.069 | 0.172 | 29.0 | 25.6 | Present Invention Example |
| 54 | 54 | 54 | 96.8 | 1.1 | 2.1 | 10.0 | 85.4 | 2.0 | 2.6 | 0.052 | 5.0 | 0.038 | 0.073 | 44.0 | 39.2 | Present Invention Example |
| 55 | 55 | 55 | 96.7 | 1.0 | 2.3 | 12.0 | 82.7 | 3.0 | 2.3 | 0.134 | 6.0 | 0.084 | 0.172 | 20.0 | 20.8 | Present Invention Example |

[Table 5C]

| Manufacture No. | Steel Sheet No. | Steel No. | Martensite Area% | Residual Austenite Area% | Ferrite + Pearlite + Bainite + Cementite Area% | Al Mass% | Fe Mass% | Si Mass% | Others Mass% | Cu_d Atom% | T_d μm | Cu_m Atom% | Cu_0 Atom% | T_m μm | Right Side (0.8 x T_d + T_m) of Expression (3) μm | Remarks |
|---|---|---|---|---|---|---|---|---|---|---|---|---|---|---|---|---|
| | | | Microstructure of Steel Sheet | | | Diffusion Layer | | | | | | | | | | |
| 56 | 56 | 56 | 27.0 | 0.0 | 73.0 | 11.0 | 82.4 | 4.0 | 2.6 | 0.092 | 4.0 | 0.057 | 0.123 | 22.0 | 20.8 | Comparative Example |
| 57 | 57 | 57 | 74.6 | 0.4 | 25.0 | 8.0 | 87.7 | 3.0 | 1.3 | 0.049 | 7.0 | 0.037 | 0.072 | 16.0 | 18.4 | Comparative Example |
| 58 | 58 | 58 | 68.6 | 0.4 | 31.0 | 8.0 | 87.8 | 3.0 | 1.2 | 0.045 | 9.0 | 0.038 | 0.073 | 21.0 | 24.0 | Comparative Example |
| 59 | 59 | 59 | 58.0 | 0.0 | 42.0 | 8.0 | 87.9 | 3.0 | 1.1 | 0.048 | 9.0 | 0.036 | 0.072 | 20.0 | 23.2 | Comparative Example |
| 60 | 60 | 60 | 87.2 | 0.8 | 12.0 | 8.0 | 85.9 | 4.0 | 2.1 | 0.137 | 8.0 | 0.095 | 0.187 | 19.0 | 21.6 | Comparative Example |
| 61 | 61 | 61 | 87.8 | 0.9 | 11.3 | 9.0 | 85.8 | 3.0 | 2.2 | 0.059 | 7.0 | 0.039 | 0.092 | 23.0 | 24.0 | Comparative Example |
| 62 | 62 | 62 | 98.1 | 0.7 | 1.2 | 9.0 | 86.0 | 3.0 | 2.0 | 0.016 | 7.0 | 0.017 | 0.043 | 19.0 | 20.8 | Comparative Example |
| 63 | 63 | 63 | 98.0 | 0.9 | 1.1 | 8.0 | 88.0 | 2.0 | 2.0 | 0.003 | 9.0 | 0.012 | 0.029 | 17.0 | 20.8 | Comparative Example |
| 64 | 64 | 64 | 97.9 | 0.8 | 1.3 | 8.0 | 87.8 | 2.0 | 2.2 | 0.008 | 12.0 | 0.013 | 0.031 | 16.0 | 22.4 | Comparative Example |
| 65 | 65 | 65 | 97.6 | 1.1 | 1.3 | 9.0 | 86.1 | 3.0 | 1.9 | 0.055 | 7.0 | 0.068 | 0.088 | 19.0 | 20.8 | Comparative Example |
| 66 | 66 | 66 | 97.2 | 1.4 | 1.4 | 8.0 | 88.0 | 2.0 | 2.0 | 0.062 | 6.0 | 0.073 | 0.088 | 19.0 | 20.0 | Comparative Example |
| 67 | 67 | 67 | 96.5 | 1.3 | 2.2 | 9.0 | 86.1 | 3.0 | 1.9 | 0.054 | 9.0 | 0.063 | 0.081 | 22.0 | 24.8 | Comparative Example |
| 68 | 68 | 68 | 97.6 | 1.1 | 1.3 | 9.0 | 85.2 | 4.0 | 1.8 | 0.054 | 7.0 | 0.040 | 0.082 | 22.0 | 18.4 | Comparative Example |
| 69 | 69 | 69 | 97.6 | 1.1 | 1.3 | 9.0 | 85.2 | 4.0 | 1.8 | 0.054 | 22.1 | 0.040 | 0.082 | 4.9 | 21.6 | Comparative Example |
| 70 | 70 | 70 | 47.0 | 0.0 | 53.0 | - | - | - | - | - | - | - | - | - | - | Comparative Example |
| 71 | 71 | 71 | 0.0 | 0.0 | 100.0 | 9.0 | 85.0 | 4.0 | 2.0 | 0.053 | 7.0 | 0.041 | 0.081 | 20.0 | 21.6 | Comparative Example |
| 72 | 72 | 72 | 98.1 | 0.8 | 1.1 | 10.1 | 84.8 | 3.2 | 1.9 | 0.064 | 7.0 | 0.038 | 0.078 | 23.0 | 26.4 | Present Invention Example |
| 73 | 73 | 73 | 97.6 | 0.1 | 2.3 | 10.0 | 84.6 | 3.4 | 2.0 | 0.055 | 8.0 | 0.038 | 0.075 | 24.0 | 25.6 | Present Invention Example |
| 74 | 74 | 65 | 98.4 | 0.3 | 1.3 | 9.1 | 85.7 | 3.3 | 1.9 | 0.070 | 7.0 | 0.068 | 0.088 | 19.0 | 20.8 | Present Invention Example |
| 75 | 75 | 65 | 98.7 | 0.2 | 1.0 | 9.0 | 85.8 | 3.5 | 1.7 | 0.073 | 7.0 | 0.069 | 0.089 | 18.0 | 20.0 | Present Invention Example |
| 76 | 76 | 28 | 98.5 | 1.0 | 0.5 | 11.0 | 81.5 | 2.0 | 5.5 | 1.920 | 6.0 | 1.035 | 1.975 | 23.0 | 23.2 | Present Invention Example |
| 77 | 77 | 50 | 98.0 | 1.0 | 1.0 | 9.1 | 85.2 | 3.9 | 1.8 | 0.044 | 10.0 | 0.040 | 0.082 | 24.0 | 27.2 | Present Invention Example |
| 78 | 78 | 33 | - | - | - | - | - | - | - | - | - | - | - | - | - | Comparative Example |
| 79 | 79 | 74 | 99.0 | 0.5 | 0.5 | 8.1 | 85.9 | 4.0 | 2.0 | 0.033 | 4.1 | 0.027 | 0.058 | 19.9 | 19.2 | Present Invention Example |
| 80 | 80 | 62 | 98.2 | 0.5 | 1.3 | 9.1 | 85.9 | 2.0 | 3.0 | 0.023 | 7.0 | 0.017 | 0.043 | 19.0 | 20.8 | Comparative Example |
| 81 | 81 | 66 | 98.5 | 1.0 | 0.5 | 8.1 | 86.9 | 3.0 | 2.0 | 0.089 | 6.0 | 0.073 | 0.088 | 19.0 | 20.0 | Comparative Example |
| 82 | 82 | 49 | 98.5 | 1.0 | 0.5 | 9.0 | 87.0 | 2.0 | 2.0 | 0.074 | 28.7 | 0.037 | 0.076 | 4.3 | 26.4 | Comparative Example |

Each underline indicates that the underlined number is outside the range of the present invention.

[Table 6A]

| Manufacture No. | Steel Sheet No. | Steel No. | TS MPa | H (HV) | Corrosion Resistance Evaluation | Remarks |
|---|---|---|---|---|---|---|
| 1 | 1 | 1 | 1062 | 346 | V | Present Invention Example |
| 2 | 2 | 2 | 1575 | 472 | G | Present Invention Example |
| 3 | 3 | 3 | 1484 | 469 | V | Present Invention Example |
| 4 | 4 | 4 | 1491 | 451 | G | Present Invention Example |
| 5 | 5 | 5 | 1448 | 460 | V | Present Invention Example |
| 6 | 6 | 6 | 1549 | 481 | G | Present Invention Example |
| 7 | 7 | 7 | 1461 | 461 | V | Present Invention Example |
| 8 | 8 | 8 | 1600 | 490 | E | Present Invention Example |
| 9 | 9 | 9 | 1497 | 472 | G | Present Invention Example |
| 10 | 10 | 10 | 1464 | 462 | G | Present Invention Example |
| 11 | 11 | 11 | 1595 | 487 | V | Present Invention Example |
| 12 | 12 | 12 | 1466 | 454 | E | Present Invention Example |
| 13 | 13 | 13 | 1504 | 474 | G | Present Invention Example |
| 14 | 14 | 14 | 1560 | 488 | V | Present Invention Example |
| 15 | 15 | 15 | 1466 | 462 | V | Present Invention Example |
| 16 | 16 | 16 | 1410 | 429 | E | Present Invention Example |
| 17 | 17 | 17 | 1566 | 476 | V | Present Invention Example |
| 18 | 18 | 18 | 1381 | 433 | G | Present Invention Example |
| 19 | 19 | 19 | 1453 | 454 | V | Present Invention Example |

(continued)

| Manufacture No. | Steel Sheet No. | Steel No. | TS MPa | H (HV) | Corrosion Resistance Evaluation | Remarks |
|---|---|---|---|---|---|---|
| 20 | 20 | 20 | 1476 | 454 | G | Present Invention Example |
| 21 | 21 | 21 | 1519 | 479 | G | Present Invention Example |
| 22 | 22 | 22 | 1515 | 467 | G | Present Invention Example |
| 23 | 23 | 23 | 1525 | 469 | G | Present Invention Example |
| 24 | 24 | 24 | 1476 | 468 | V | Present Invention Example |
| 25 | 25 | 25 | 1475 | 462 | E | Present Invention Example |
| 26 | 26 | 26 | 1485 | 469 | E | Present Invention Example |
| 27 | 27 | 27 | 1520 | 471 | E | Present Invention Example |
| 28 | 28 | 28 | 1504 | 475 | E | Present Invention Example |

[Table 6B]

| Manufacture No. | Steel Sheet No. | Steel No. | TS MPa | H (HV) | Corrosion Resistance Evaluation | Remarks |
|---|---|---|---|---|---|---|
| 29 | 29 | 29 | 1471 | 459 | G | Present Invention Example |
| 30 | 30 | 30 | 1486 | 458 | G | Present Invention Example |
| 31 | 31 | 31 | 1461 | 447 | V | Present Invention Example |
| 32 | 32 | 32 | 1479 | 465 | E | Present Invention Example |
| 33 | 33 | 33 | 1525 | 477 | E | Present Invention Example |
| 34 | 34 | 34 | 1511 | 465 | E | Present Invention Example |
| 35 | 35 | 35 | 1421 | 434 | G | Present Invention Example |
| 36 | 36 | 36 | 1505 | 464 | G | Present Invention Example |
| 37 | 37 | 37 | 1527 | 481 | G | Present Invention Example |
| 38 | 38 | 38 | 1492 | 468 | G | Present Invention Example |
| 39 | 39 | 39 | 1500 | 473 | E | Present Invention Example |
| 40 | 40 | 40 | 1540 | 482 | V | Present Invention Example |
| 41 | 41 | 41 | 1598 | 497 | E | Present Invention Example |
| 42 | 42 | 42 | 1549 | 472 | V | Present Invention Example |
| 43 | 43 | 43 | 1572 | 487 | V | Present Invention Example |
| 44 | 44 | 44 | 1464 | 457 | G | Present Invention Example |
| 45 | 45 | 45 | 1499 | 465 | V | Present Invention Example |
| 46 | 46 | 46 | 1484 | 463 | E | Present Invention Example |
| 47 | 47 | 47 | 1587 | 485 | V | Present Invention Example |
| 48 | 48 | 48 | 1535 | 468 | G | Present Invention Example |
| 49 | 49 | 49 | 1503 | 468 | G | Present Invention Example |
| 50 | 50 | 50 | 1457 | 446 | G | Present Invention Example |
| 51 | 51 | 51 | 1416 | 444 | G | Present Invention Example |
| 52 | 52 | 52 | 1163 | 379 | G | Present Invention Example |
| 53 | 53 | 53 | 1239 | 394 | V | Present Invention Example |

(continued)

| Manufacture No. | Steel Sheet No. | Steel No. | TS MPa | H (HV) | Corrosion Resistance Evaluation | Remarks |
|---|---|---|---|---|---|---|
| 54 | 54 | 54 | 1371 | 425 | G | Present Invention Example |
| 55 | 55 | 55 | 1335 | 418 | V | Present Invention Example |

[Table 6C]

| Manufacture No. | Steel Sheet No. | Steel No. | TS MPa | H (HV) | Corrosion Resistance Evaluation | Remarks |
|---|---|---|---|---|---|---|
| 56 | 56 | <u>56</u> | <u>661</u> | 236 | V | Comparative Example |
| 57 | 57 | <u>57</u> | <u>1112</u> | 356 | G | Comparative Example |
| 58 | 58 | <u>58</u> | <u>982</u> | 325 | G | Comparative Example |
| 59 | 59 | <u>59</u> | <u>634</u> | 233 | G | Comparative Example |
| 60 | 60 | <u>60</u> | <u>1231</u> | 352 | E | Comparative Example |
| 61 | 61 | <u>61</u> | <u>1311</u> | 383 | G | Comparative Example |
| 62 | <u>62</u> | 62 | 1456 | 459 | <u>B</u> | Comparative Example |
| 63 | <u>63</u> | 63 | 1495 | 452 | <u>B</u> | Comparative Example |
| 64 | <u>64</u> | <u>64</u> | 1142 | 367 | <u>B</u> | Comparative Example |
| 65 | <u>65</u> | 65 | 1546 | 475 | <u>B</u> | Comparative Example |
| 66 | 66 | 66 | 1545 | 469 | <u>B</u> | Comparative Example |
| 67 | <u>67</u> | 67 | 1168 | 370 | <u>B</u> | Comparative Example |
| <u>68</u> | 68 | 68 | 1455 | 460 | B | Comparative Example |
| <u>69</u> | 69 | 69 | 1460 | 447 | <u>B</u> | Comparative Example |
| <u>70</u> | 70 | 70 | <u>981</u> | 331 | <u>B</u> | Comparative Example |
| <u>71</u> | 71 | 71 | <u>720</u> | 252 | G | Comparative Example |
| 72 | 72 | 72 | 1503 | 467 | G | Present Invention Example |
| 73 | 73 | 73 | 1163 | 378 | G | Present Invention Example |
| 74 | 74 | 65 | 1548 | 487 | G | Present Invention Example |
| 75 | 75 | 65 | 1548 | 486 | G | Present Invention Example |
| 76 | 76 | 28 | 1503 | 464 | E | Present Invention Example |
| 77 | 77 | 50 | 1458 | 460 | G | Present Invention Example |
| 78 | <u>78</u> | 33 | - | - | - | Comparative Example |
| 79 | 79 | 74 | 1514 | 461 | G | Present Invention Example |
| 80 | <u>80</u> | <u>62</u> | 1455 | 456 | <u>B</u> | Comparative Example |
| 81 | <u>81</u> | 66 | 1544 | 475 | <u>B</u> | Comparative Example |
| 82 | 82 | 49 | 1504 | 462 | <u>B</u> | Comparative Example |

Each underline indicates that the underlined number is outside the range of the present invention, and the property value is not preferable.

From Tables 6A to 6C, it is found that, in the present invention examples, the hot-stamp formed bodies having a high strength and excellent corrosion resistance were obtained. On the other hand, it is found that in the comparative examples, one or more of the above-described properties did not satisfy the acceptance criteria.

INDUSTRIAL APPLICABILITY

According to the aspect of the present invention, it is possible to provide a hot-stamp formed body having a high strength and excellent corrosion resistance, and an aluminum-coated steel sheet for hot stamping with which the hot-stamp formed body can be produced.

**Claims**

1. A hot-stamp formed body comprising:

a steel sheet;
a diffusion layer provided onto the steel sheet; and
an Fe-Al alloy layer provided onto the diffusion layer,
wherein a chemical composition of the steel sheet comprises, by mass%,
C: 0.050% to 0.250%,
Si: 0.010% to 2.000%,
Mn: 0.80% to 3.00%,
P: 0.100% or less,
S: 0.0100% or less,
Al: 0.001% to 0.500%,
N: 0.0001 % to 0.0150%,
O: 0.1000% or less,
Ti: 0.005% to 0.100%,
B: 0.0005% to 0.0050%,
Cu: 0.050% to 3.000%,
As: 0.0005% to 1.0000%,
Cr: 0% to 1.000%,
Mo: 0% to 1.000%,
Ni: 0% to 3.000%,
Co: 0% to 0.5000%,
W: 0% to 3.0000%,
Sn: 0% to 0.5000%,
Nb: 0% to 0.1000%,
V: 0% to 0.100%,
Zr: 0% to 0.100%,
Ca: 0% to 0.0050%,
Mg: 0% to 0.0050%,
REM: 0% to 0.0050%,
Sb: 0% to 0.0200%,
Pb: 0% to 0.0100%, and
a remainder comprising Fe and impurities,
a microstructure of the steel sheet comprises, by area%,
90.0% to 100.0% of martensite,
0.0% to 3.0% of residual austenite, and
0.0% to 10.0% in total of one or two or more of ferrite, pearlite, bainite, and cementite,
a chemical composition of the diffusion layer comprises, by mass%,
Al: more than 0.5% and less than 20.0%,
Fe: more than 80.0% and less than 99.5%, and
Si: 0.0% to 15.0%,
a Cu concentration in the diffusion layer satisfies Expressions (1) and (2),
an average thickness of the diffusion layer satisfies Expression (3), and
the Fe-Al alloy layer includes an Fe-Al phase having an Fe content of 40 to 60 mass% by mass% and an Al content of 40% to 60% by mass%,

$$0.025 \leq \mathrm{Cu_d} \ldots (1),$$

$$\mathrm{Cu_m} < \mathrm{Cu_d} < \mathrm{Cu_0} \dots (2),$$

and

$$2.0 \leq \mathrm{T_d} \leq 0.8 \times (\mathrm{T_d} + \mathrm{T_m}) \dots (3),$$

in Expressions (1) and (2), $\mathrm{Cu_d}$ denotes a Cu concentration in the diffusion layer by atom%, $\mathrm{Cu_m}$ denotes a Cu concentration in the Fe-Al phase in the Fe-Al alloy layer by atom%, and $\mathrm{Cu_0}$ denotes a Cu concentration in the steel sheet by atom%, and

in Expression (3), $\mathrm{T_d}$ denotes an average thickness in $\mu$m of the diffusion layer, and $\mathrm{T_m}$ denotes an average thickness in $\mu$m of the Fe-Al alloy layer.

2. The hot-stamp formed body according to Claim 1,

wherein the chemical composition of the steel sheet comprises, by mass%,
one or two or more selected from the group consisting of
Cr: 0.020% to 1.000%,
Mo: 0.008% to 1.000%,
Ni: 0.005% to 3.000%,
Co: 0.0005% to 0.5000%,
W: 0.0005% to 3.0000%,
Sn: 0.0005% to 0.5000%,
Nb: 0.0002% to 0.1000%,
V: 0.005% to 0.100%,
Zr: 0.005% to 0.100%,
Ca: 0.0005% to 0.0050%,
Mg: 0.0005% to 0.0050%,
REM: 0.0005% to 0.0050%,
Sb: 0.0005% to 0.0200%, and
Pb: 0.0003% to 0.0100%.

3. An aluminum-coated steel sheet for hot stamping comprising:

a steel sheet;
an Fe-Al-Si alloy layer provided onto the steel sheet; and
an Al-based coating layer provided onto the Fe-Al-Si alloy layer,
wherein a chemical composition of the steel sheet comprises, by mass%,
C: 0.050% to 0.250%,
Si: 0.010% to 2.000%,
Mn: 0.80% to 3.00%,
P: 0.100% or less,
S: 0.0100% or less,
Al: 0.001 % to 0.500%,
N: 0.0001% to 0.0150%,
O: 0.1000% or less,
Ti: 0.005% to 0.100%,
B: 0.0005% to 0.0050%,
Cu: 0.050% to 3.000%,
As: 0.0005% to 1.0000%,
Cr: 0% to 1.000%,
Mo: 0% to 1.000%,
Ni: 0% to 3.000%,
Co: 0% to 0.5000%,
W: 0% to 3.0000%,
Sn: 0% to 0.5000%,
Nb: 0% to 0.1000%,
V: 0% to 0.100%,

Zr: 0% to 0.100%,
Ca: 0% to 0.0050%,
Mg: 0% to 0.0050%,
REM: 0% to 0.0050%,
Sb: 0% to 0.0200%,
Pb: 0% to 0.0100%, and
a remainder comprising Fe and impurities,
a microstructure of the steel sheet comprises, by area%,
20% to 95% of ferrite, and
5% to 80% in total of one or two or more of martensite, bainite, pearlite, and cementite,
a Cu concentration in the Fe-Al-Si alloy layer satisfies Expression (4), and
a chemical composition of the Al-based coating layer comprises, by mass%,
Al: 85.0% to 95.0%, and
Si: 5.0% to 15.0%,

$$Cu_i \leq 0.40 \times Cu_0 \ ... \ (4),$$

in Expression (4), $Cu_i$ denotes a Cu concentration in the Fe-Al-Si alloy layer by atom%, and $Cu_0$ denotes a Cu concentration in the steel sheet by atom%.

4. The aluminum-coated steel sheet for hot stamping according to Claim 3, wherein the chemical composition of the steel sheet comprises, by mass%, one or two or more selected from the group consisting of

Cr: 0.020% to 1.000%,
Mo: 0.008% to 1.000%,
Ni: 0.005% to 3.000%,
Co: 0.0005% to 0.5000%,
W: 0.0005% to 3.0000%,
Sn: 0.0005% to 0.5000%,
Nb: 0.0002% to 0.1000%,
V: 0.005% to 0.100%,
Zr: 0.005% to 0.100%,
Ca: 0.0005% to 0.0050%,
Mg: 0.0005% to 0.0050%,
REM: 0.0005% to 0.0050%,
Sb: 0.0005% to 0.0200%, and
Pb: 0.0003% to 0.0100%.

# FIG. 1

# FIG. 2

## INTERNATIONAL SEARCH REPORT

| International application No. |
|---|
| **PCT/JP2024/005045** |

**A.    CLASSIFICATION OF SUBJECT MATTER**

*C22C 38/00*(2006.01)i; *C21D 1/18*(2006.01)i; *C21D 9/00*(2006.01)i; *C21D 9/46*(2006.01)i; *C22C 21/00*(2006.01)i;
*C22C 21/02*(2006.01)i; *C22C 38/60*(2006.01)i; *C23C 2/12*(2006.01)i
FI:    C22C38/00 301Z; C22C38/00 301T; C22C38/60; C21D1/18 Q; C21D9/00 A; C23C2/12; C22C21/02; C22C21/00 M;
C21D9/46 J

According to International Patent Classification (IPC) or to both national classification and IPC

**B.    FIELDS SEARCHED**

Minimum documentation searched (classification system followed by classification symbols)

C22C38/00-38/60; C21D1/18; C21D9/00; C23C2/00-2/40; C22C21/00; C22C21/02; C21D9/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2021/100842 A1 (NIPPON STEEL CORPORATION) 27 May 2021 (2021-05-27) claims, paragraphs [0020], [0024], [0064]-[0067], [0080], [0085]-[0088] | 1-4 |
| A | WO 2021/230150 A1 (NIPPON STEEL CORPORATION) 18 November 2021 (2021-11-18) claims | 1-4 |
| A | WO 2021/095836 A1 (NIPPON STEEL CORPORATION) 20 May 2021 (2021-05-20) claims, paragraphs [0009]-[0010] | 1-4 |
| A | JP 2013-227614 A (NIPPON STEEL & SUMITOMO METAL CORPORATION) 07 November 2013 (2013-11-07) claims, paragraph [0024] | 1-4 |
| P, A | WO 2023/132289 A1 (NIPPON STEEL CORPORATION) 13 July 2023 (2023-07-13) claims, paragraph [0038] | 1-4 |

☐ Further documents are listed in the continuation of Box C.    ☑ See patent family annex.

| | | |
|---|---|---|
| * | Special categories of cited documents: | "T"    later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"    document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"    document member of the same patent family |

| Date of the actual completion of the international search | Date of mailing of the international search report |
|---|---|
| **25 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

42

**INTERNATIONAL SEARCH REPORT**
Information on patent family members

International application No.

**PCT/JP2024/005045**

| Patent document cited in search report | | | Publication date (day/month/year) | Patent family member(s) | | | Publication date (day/month/year) |
|---|---|---|---|---|---|---|---|
| WO | 2021/100842 | A1 | 27 May 2021 | EP | 4063525 | A1 | |
| | | | | claims, paragraphs [0022], [0026]-[0027], [0095]-[0108], [0123]-[0126], [0134]-[0142] | | | |
| | | | | US | 2022/0389553 | A1 | |
| | | | | CN | 114729429 | A | |
| WO | 2021/230150 | A1 | 18 November 2021 | EP | 4151758 | A1 | |
| | | | | claims | | | |
| | | | | US | 2023/0081832 | A1 | |
| | | | | CN | 115135790 | A1 | |
| WO | 2021/095836 | A1 | 20 May 2021 | CN | 114599810 | A | |
| JP | 2013-227614 | A | 07 November 2013 | (Family: none) | | | |
| WO | 2023/132289 | A1 | 13 July 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023022724 A

- JP 2003034845 A

**Non-patent literature cited in the description**

- **TADASHI MAKI** ; **IMAO TAMURA**. *Iron and Steel*, 1987, vol. 67 (1)
- **HAJIME SUTO** ; **IMAO TAMURA** ; **TAIJI NISHIZA-WA**. Metallography. Maruzen Group, 1977, 170

- **WILLIAM C. LESLIE**. The Physical Metallurgy of Steels. Hemisphere Publishing Corporation, 1981, 215